# EUROPEAN PATENT APPLICATION

(11) **EP 4 629 472 A1**
(43) Date of publication of application: **08.10.2025**
(21) Application number: 22968956.7
(22) Date of filing: 22.12.2022
(51) Int. Cl.: H02J 7/00

(54) **CHARGING MODULE, CHARGING APPARATUS, CONTROL SYSTEM, AND TERMINAL DEVICE**

(71) Applicant: Shenzhen Yinwang Intelligent Technologies Co., Ltd., Shenzhen, Guangdong 518110 (CN)
(72) Inventor: HUANG, Yu, Shenzhen, Guangdong 518129 (CN); JIANG, Haichuan, Shenzhen, Guangdong 518129 (CN); XIA, Fan, Shenzhen, Guangdong 518129 (CN)
(74) Representative: Maiwald GmbH
(86) International application number: PCT/CN2022/141143
(87) International publication number: WO 2024/130661

(57) **Abstract**

A charging module, a charging apparatus, a control system, and a terminal device are provided and applicable to the field of mechatronics technologies, and may be configured to detect connection location information of a to-be-charged device during charging. The charging module includes a detection unit and a charging unit. The charging unit is connected to the to-be-charged device, and is configured to supply power to the to-be-charged device. The detection unit is connected to a control unit, and is configured to send the connection location information of the to-be-charged device to the control unit. The charging module can not only supply power to the to-be-charged device, but also detect a connection location of the to-be-charged device, and further report the connection location to the control unit. **In** this way, the control unit can provide, based on the connection location, a targeted service for a user using the to-be-charged device.

## Description

### TECHNICAL FIELD

This application relates to the field of mechatronics technologies, and provides a charging module, a charging apparatus, a control system, and a terminal device.

### BACKGROUND

With development of internet of vehicles technologies, an increasing quantity of vehicles have an in-vehicle charging function. For a vehicle (for example, a fuel vehicle, an electric vehicle, or a hybrid electric vehicle) having an in-vehicle charging function, the vehicle may externally feature a wired or wireless charging base, and internally have a connection to a vehicle battery through a charging module. The charging module may be, for example, a charging case, a direct current/direct current (direct current/direct current, DC/DC) converter, or another type of charging module. When a terminal device is connected to the wired or wireless charging base, the vehicle battery may supply power to the terminal device through the charging module.

To improve convenience of in-vehicle charging, in an increasing quantity of vehicles, charging bases are separately disposed in different locations, so that a user can use a charging base closest to the user to charge a device like a mobile phone. This effectively improves vehicle use experience of the user. However, in a conventional in-vehicle charging manner, only a terminal device currently connected to a charging base can be charged. This charging manner is not conducive to providing a targeted service for a user, and is increasingly unable to meet a requirement of the user for in-vehicle charging.

Therefore, currently, a charging solution for an electronic device (for example, a vehicle) needs to be further studied.

### SUMMARY

This application provides a charging module, a charging apparatus, a control system, and a terminal device for detecting connection location information of a to-be-charged device during charging, to provide a targeted service for a user using the to-be-charged device.

According to a first aspect, this application provides a charging module, including a detection unit and a charging unit. The charging unit is connected to a to-be-charged device, and is configured to supply power to the to-be-charged device. The detection unit is connected to a control unit, and is configured to send connection location information of the to-be-charged device to the control unit. It may be learned that the charging module can not only supply power to the to-be-charged device, but also detect a connection status of the to-be-charged device, and report the connection status to the control unit. In this way, the control unit provides, based on the connection status, a targeted service for a user using the to-be-charged device.

It should be noted that a connection between the charging unit and the to-be-charged device may be a wireless connection. That is, the charging module may be configured to implement a charging interface detection and reporting function in a wireless charging scenario. Alternatively, a connection between the charging unit and the to-be-charged device may be a wired connection. That is, the charging module may be configured to implement a charging interface detection and reporting function in a wired charging scenario. This is not specifically limited.

In a possible design, the connection location information is an electrical signal generated by the detection unit triggered when the to-be-charged device is connected to the detection unit.

In a possible design, the detection unit may include a first interface, a second interface, a third interface, and a fourth interface. The first interface communicates with the fourth interface, and the second interface communicates with the third interface. The first interface is configured to connect to the to-be-charged device, the second interface is configured to: connect to the to-be-charged device and receive a reference electrical signal, the third interface is configured to connect to the control unit, and the fourth interface is configured to connect to the charging unit.

In the foregoing design, the detection unit serves as a bridge connecting the charging unit and the to-be-charged device, and can implement electric energy transmission between the charging unit and the to-be-charged device. The electric energy transmission may be to transmit electric energy output by the charging unit to a to-be-charged unit to implement charging of the to-be-charged unit, or may be to transmit electric energy of a to-be-charged unit to the charging unit to implement reverse charging of the to-be-charged unit. This is not specifically limited. As a bridge connecting the to-be-charged device and the control unit, the detection unit can further transmit, to the control unit, an electrical signal status of the to-be-charged device after the to-be-charged device is connected, which helps the control unit learn of a connection status of the to-be-charged device based on the electrical signal status.

In a further design, the reference signal may be specifically a ground signal, and the ground signal may be implemented in the following manners:
Manner 1: The second interface is grounded. In this way, the second interface may directly obtain a ground signal.
Manner 2: The detection unit further includes a fifth interface, and the fifth interface is connected to a grounding component in the control unit after being in communication with the second interface. In this way, the second interface may obtain a ground signal synchronized from the grounding component in the control unit.

In the foregoing design, the reference signal, for example, a ground signal, may provide a unified reference potential for the detection unit, to reduce environmental interference, and improve accuracy and reliability of detection performed by the detection unit.

In a possible design, the third interface of the detection unit may be connected to a detection interface in the control unit through a hard wire, and the detection interface is configured to determine the connection location information of the to-be-charged device based on an electrical signal status at the third interface of the detection unit. The hard wire is a wire that can transmit a level signal, that is, any conductive wire. In a specific example, the hard wire may be an input/output (input/output, I/O) wire, and the I/O wire is a weak electrical wire and is configured to transmit a level signal with an irregular frequency and a random amplitude. In addition, the detection interface may be originally provided in the control unit, or may be additionally provided in the control unit when the control unit does not have a detection interface. This is not specifically limited.

In the foregoing design, the detection interface in the control unit is used to cooperate with the charging module to implement a detection function, so that the charging module and the control unit only need to be connected through a conductive wire, and do not need to perform communicative interaction. Therefore, communication overheads can be reduced, and a requirement on the control unit can be further lowered, thereby helping reduce costs.

In a possible design, the charging module may be used in an in-vehicle charger. Specifically, the fourth interface of the detection unit may be connected to an in-vehicle charging case, and the third interface of the detection unit may be connected to the detection interface of the in-vehicle control unit. In this way, the in-vehicle charger that originally has only a charging function can additionally have a detection function, and can further obtain information such as a location of the to-be-charged device during charging, so that the in-vehicle control unit provides a targeted service for a user near the to-be-charged device that is currently being charged.

In a possible design, the detection unit includes the first interface, the second interface, the third interface, and the fourth interface, and the charging unit includes a first interface, a second interface, and a third interface. The first interface of the detection unit is connected to the first interface of the charging unit after being in communication with the fourth interface of the detection unit, and the second interface of the detection unit is connected to the second interface of the charging unit after being in communication with the third interface of the detection unit. The first interface of the detection unit is configured to connect to the to-be-charged device, the second interface of the detection unit is configured to: connect to the to-be-charged device and receive the reference electrical signal, and the third interface of the charging unit is configured to connect to the control unit.

In the foregoing design, the charging unit serves as a bridge connecting the detection unit and the control unit, and can forward, to the control unit, the electrical signal status of the to-be-charged device connected to the detection unit, so that the control unit learns of the charging module to which the to-be-charged device is connected, and can provide a more targeted service for a user near the charging module.

In a possible design, a third interface of the charging unit is connected to the detection interface in the control unit through a hard wire, and the detection interface is configured to determine the connection location information of the to-be-charged device based on an electrical signal status at the third interface of the charging unit.

In the foregoing design, the detection interface in the control unit is used to cooperate with the charging module to implement the detection function, so that the charging module and the control unit only need to be connected through a conductive wire, and do not need to perform communicative interaction. Therefore, communication overheads can be reduced, and a requirement on the control unit can be further lowered, thereby helping reduce costs.

In a possible design, the detection unit includes a first interface, a second interface, a third interface, and a fourth interface, and the charging unit includes a detection circuit, a first interface, a second interface, and a third interface. The first interface of the detection unit is connected to the first interface of the charging unit after being in communication with the fourth interface of the detection unit, and the second interface of the detection unit is connected to the second interface of the charging unit after being in communication with the third interface of the detection unit. The second interface of the charging unit is further connected to a first end of the detection circuit, and a second end of the detection circuit is connected to the third interface of the charging unit. The first interface of the detection unit and the second interface of the detection unit are configured to connect to the to-be-charged device, and the third interface of the charging unit is configured to connect to the control unit. The detection circuit is configured to: determine the connection location information of the to-be-charged device based on an electrical signal status at the second interface of the charging unit, and send the connection location information to the control unit through the third interface of the charging unit.

In the foregoing design, the charging unit has both a detection function and a communication function. As a bridge connecting the detection unit and the control unit, the charging unit can forward the connection location information to the control unit after detecting that the to-be-charged device is connected to the detection unit, so that the control unit can provide a more targeted service for a user using the to-be-charged device.

In a possible design, the charging module may specifically include a charging unit and K detection units. The charging unit includes K detection circuits that are in a one-to-one correspondence with the K detection units, where K is a positive integer greater than or equal to 2. For a connection manner between each of the K detection units and the charging module, a connection manner between each detection unit and the charging unit, a connection manner between each detection unit and a corresponding detection circuit, and a connection manner between each detection circuit and the control unit, refer to the foregoing design.

In the foregoing design, one charging unit and a plurality of detection units are disposed in the charging module, so that a plurality of charging interfaces can be provided by using one charging unit. This not only helps implement charging functions of a plurality of to-be-charged devices in a same time period, but also can detect an interface to which the to-be-charged device is currently connected, thereby helping provide a targeted service for a user near the charging interface to which the to-be-charged device is connected.

In a possible design, the third interface of the charging unit may be connected to a data interface of the control unit in any one of the following manners: a controller area network (controller area network, CAN) bus, a local interconnect network (local interconnect network, LIN) bus, an Ethernet (Ethernet, ETH) bus, an inter-integrated circuit (inter-integrated circuit, I2C) bus, a serial peripheral interface (serial peripheral interface, SPI) bus, a onewire (onewire), a universal asynchronous receiver/transmitter (universal asynchronou, UART) bus, or a joint test action group (joint test action group, JTAG) bus. It should be noted that only several possible examples are provided herein. The third interface of the charging unit may alternatively be connected to the data interface of the control unit through another user-defined proprietary protocol bus. This is not specifically limited in this application.

In the foregoing design, a proper communication protocol and a corresponding data line may be selected based on an actual requirement to connect the charging unit to the control unit, so that the charging unit sends the connection location information to the control unit according to the communication protocol corresponding to the set data line.

In a possible design, the detection unit includes a first interface, a second interface, a third interface, and a fourth interface, the charging unit includes a first interface, a second interface, and a third interface, and a detection circuit is disposed in the control unit. The first interface of the detection unit is connected to the first interface of the charging unit after being in communication with the fourth interface of the detection unit. The second interface of the detection unit is connected to the second interface of the charging unit after being in communication with the third interface of the detection unit. The second interface of the charging unit is connected to the detection circuit in the control unit after being in communication with the third interface of the charging unit. The detection circuit is configured to determine the connection location information of the to-be-charged device based on an electrical signal status at the third interface of the charging unit.

In the foregoing design, the detection unit is connected to the control unit through the charging unit. The detection circuit is disposed in the control unit, so that the control unit can monitor a change of an electrical signal status on a charging unit side by using the detection circuit, and directly determine, without the detection unit sending information to the control unit, that the to-be-charged device is connected to the charging module. In this way, a communication loss in a detection process can be reduced.

In another possible design, the detection unit includes a first interface, a second interface, a third interface, and a fourth interface, and a detection circuit is disposed in the control unit. The first interface of the detection unit is connected to the charging unit after being in communication with the fourth interface of the detection unit. The second interface of the detection unit is connected to the detection circuit in the control unit after being communication with the third interface of the detection unit. The detection circuit is configured to determine the connection location information of the to-be-charged device based on an electrical signal status at the third interface of the detection unit.

In the foregoing design, the detection unit is directly connected to the control unit. The detection circuit is disposed in the control unit, so that the control unit can monitor a change of an electrical signal status on a detection unit side by using the detection circuit, and directly determine, without the detection unit sending information to the control unit, that the to-be-charged device is connected to the charging module. In this way, a communication loss in a detection process can be reduced.

In a possible design, the second interface of the detection unit may be presented in a contact type, a button type, a magnetic attachment type, a buckle type, or another switch form that is easy to implement and has low costs.

In a possible design, the first interface of the detection unit may include a power interface and at least one type of charging protocol interface. For example, the power interface may be a VBUS interface and a GND interface. The charging protocol interface may include at least one of a CC interface, a D+ interface, and a D- interface, or may further include another type of charging protocol communication interface.

In the foregoing design, the VBUS interface and the GND interface may form a power loop, and the CC interface, the D+ interface, and the D- interface are used as charging protocol communication interfaces to implement a charging protocol communication function. In addition, when a plurality of charging protocol communication interfaces are disposed, the charging module can further adapt to to-be-charged devices of a plurality of charging protocol types. This helps improve universality of the charging module.

In a possible design, the charging module further includes a holder, and the charging unit is disposed on the holder. Specifically, the detection unit includes a first detection subunit and a second detection subunit. The first detection subunit is configured to connect the to-be-charged device to the holder, and is configured to send the connection location information of the to-be-charged device to the control unit. The second detection subunit is configured to connect the holder to the control unit, and is configured to send the connection location information of the holder to the control unit. In this way, the holder and the first detection subunit form a mobile charging apparatus. When the mobile charging apparatus is inserted into a control apparatus, the second detection subunit connected to the control unit may report detected connection location information of the mobile charging apparatus to the control unit. Further, when the to-be-charged device is connected to the mobile charging apparatus, the first detection subunit disposed in the mobile charging apparatus can send the connection location information of the to-be-charged device to the control unit. It may be learned that connection detection for the mobile charging apparatus and the to-be-charged device can be implemented according to the design.

In a further design, the first detection subunit includes a first interface, a second interface, and a third interface, and the second detection subunit includes a first interface, a second interface, and a third interface. The first interface of the first detection subunit is configured to connect to a first end of the charging unit, and a second end of the charging unit is configured to connect to the first interface of the second detection subunit. The second interface of the first detection subunit communicates with the second interface of the second detection subunit. The third interface of the first detection subunit communicates with the third interface of the second detection subunit. The first interface of the first detection subunit is configured to connect to a first detection interface of the to-be-charged device, the second interface of the first detection subunit is configured to: connect to a second detection interface of the to-be-charged device and receive a reference signal, and the third interface of the first detection subunit is configured to connect to a charging interface of the to-be-charged device. The first interface of the second detection subunit is configured to connect to a charging interface of the control unit, the second interface of the second detection subunit is configured to connect to a first detection interface of the control unit, and the third interface of the second detection subunit is configured to connect to a second detection interface of the control unit. According to the interface design, the control unit can detect, through the first detection interface, a change of an electrical signal status at the second interface of the second detection subunit, to learn whether a holder is connected, and detect, through the second detection interface, a change of an electrical signal status at the third interface of the second detection subunit, to learn whether there is a to-be-charged device connected to the holder.

In a possible design, the reference signal is a ground signal. Specifically, a third end of the charging unit is grounded, and the second interface of the first detection subunit is connected to the third end of the charging unit. In this way, a ground signal at the third end of the charging unit may be synchronized to the second interface of the first detection subunit.

In a possible design, the charging module is disposed on a vehicle seat, the charging module further includes a contact plate, the contact plate is configured to connect the second detection subunit to one end of a seat connector, and the other end of the seat connector is connected to the control unit. In this way, the second detection subunit and the control unit may be indirectly connected together through the contact plate and the seat connector.

In a possible design, the charging module meets at least one of the following conditions: The first interface of the first detection subunit includes a power interface and at least one type of charging protocol interface; the first interface of the second detection subunit includes a power interface; and at least one of the second interface of the first detection subunit, the third interface of the first detection subunit, the second interface of the second detection subunit, or the third interface of the second detection subunit is presented in a contact type, a button type, a magnetic attachment type, or a buckle type.

According to a second aspect, this application provides a to-be-charged device, including a charging interface and a detection interface. The charging interface is connected to a charging unit of a charging module, and is configured to receive a power supply signal provided by the charging unit. The detection interface is connected to a detection unit of the charging module, and is configured to provide connection location information of the to-be-charged device.

A possible implementation of providing the connection location information of the to-be-charged device is that the detection interface is connected to the detection unit of the charging module, and the detection unit is triggered to generate the connection location information.

In a possible design, the detection interface is presented in a contact type, a button type, a magnetic attachment type, or a buckle type.

In a possible design, the charging interface includes a power interface and at least one type of charging protocol interface.

According to a third aspect, this application provides a charging detection system, including a charging module and a to-be-charged device. The charging module is configured to provide a power supply signal for the to-be-charged device. The to-be-charged device is configured to: receive the power supply signal of the charging module, and provide connection location information for the charging module. The charging module is further configured to send the connection location information of the to-be-charged device to a control unit.

According to a fourth aspect, this application provides a control method. The method is applicable to a control unit, and the method includes: The control unit receives connection location information of a user equipment from a charging module, and controls a device at a location indicated by the connection location information to perform a corresponding operation. In this way, the charging module can further report location information of the user equipment that is currently being charged while charging, thereby helping the control unit provide a targeted service for a device at a location of the user equipment.

In a possible design, that the control unit controls a device at a location indicated by the connection location information to perform a corresponding operation includes: The control unit sends first prompt information if determining that a vehicle is about to start driving or has started driving, and a safety belt of a seat indicated by the connection location information is in an unfastened state, where the first prompt information indicates a user on the seat indicated by the connection location information to fasten the safety belt. In this way, an in-vehicle controller may first remind a user who is not fastened with a safety belt on the seat before starting the vehicle to run, to ensure that the vehicle starts running when the user sitting on the seat has fastened the safety belt, thereby ensuring driving safety of the user as much as possible. In this way, the in-vehicle controller may first prompt the user to remove the connected user equipment on the seat before unfolding the seat, to protect safety of the user equipment and a user on a rear-row seat.

In a possible design, that the control unit controls a device at a location indicated by the connection location information to perform a corresponding operation includes: The control unit sends second prompt information if determining that the user equipment affects unfolding of the seat, where the second prompt information indicates to remove the user equipment. In this way, the in-vehicle controller may first prompt the user to remove the connected user equipment on the seat before unfolding the seat, to protect safety of the user equipment and a user on a rear-row seat.

In a possible design, that the control unit controls a device at a location indicated by the connection location information to perform a corresponding operation includes: The control unit sends third prompt information if determining that the user equipment affects an unfolding operation of a laser projection screen, where the third prompt information indicates to remove the user equipment, or is used to indicate that unfolding the laser projection screen affects use of the user equipment. In this way, the in-vehicle controller may first prompt the user to remove the user equipment that blocks unfolding of the laser projection screen before unfolding the laser projection screen near the seat, to ensure that the laser projection screen can be smoothly unfolded.

In a possible design, that the control unit controls a device at a location indicated by the connection location information to perform a corresponding operation includes: The control unit displays, after detecting that a projection application on a head unit display is tapped, all currently connected user equipments and respective corresponding connection locations through the in-vehicle display, and controls, after detecting that a user equipment at a target location on the head unit display is tapped, the user equipment at the target location to perform directional projection. In this way, the in-vehicle controller may work with the in-vehicle display to put corresponding content on the connected user equipment based on a touch instruction of the user, thereby improving flexible control of a front-row user on a rear-row connected user equipment.

In a possible design, that the control unit controls a device at a location indicated by the connection location information to perform a corresponding operation includes: The control unit sends fourth prompt information if determining that a vehicle door at the location indicated by the connection location information is open, where the fourth prompt information is used to prompt not to forget the user equipment. In this way, the in-vehicle controller may remind the user to carry the user equipment before determining that the user on the seat gets off the vehicle, to ensure that the user does not forget the user equipment, thereby improving user experience.

According to a fifth aspect, this application provides a charging apparatus, including the charging module according to any design of the first aspect.

In a possible design, the charging apparatus may be presented as a charging base or a charging panel. The charging base may be a wired charging base, or may be a wireless charging base. The charging panel may be a household charging panel, an industrial charging panel, or the like.

According to a sixth aspect, this application provides a control system, including a control unit and the charging apparatus according to the second aspect. The charging apparatus is configured to send connection location information of a to-be-charged device to the control unit. The control unit is configured to: obtain a control instruction of the to-be-charged device, and control a device indicated by the connection location information to complete a control operation.

According to a seventh aspect, this application provides a terminal device, including the control system according to the third aspect.

In a possible design, the terminal device is a vehicle.

For beneficial effects of the second aspect to the seventh aspect, specifically refer to the technical effects that can be achieved by corresponding designs in the first aspect. Details are not described herein again.

### BRIEF DESCRIPTION OF DRAWINGS

FIG. 1 is a diagram of an example of an application scenario of an in-vehicle charger according to an embodiment of this application;
FIG. 2 is a diagram of an example of an architecture of an in-vehicle charging system according to an embodiment of this application;
FIG. 3 is a diagram of an example of an application scenario in the in-vehicle field according to an embodiment of this application;
FIG. 4 is a diagram of an example of a structure of a charging module according to an embodiment of this application;
FIG. 5 is a diagram of an example of a structure of a charging module according to an embodiment of this application;
FIG. 6 is a diagram of an example of a manner of providing a ground signal according to an embodiment of this application;
FIG. 7 is a diagram of an example of interface presentation of a detection unit according to an embodiment of this application;
FIG. 8 is a diagram of an example of a structure of another charging module according to an embodiment of this application;
FIG. 9 is a diagram of an example of a structure of still another charging module according to an embodiment of this application;
FIG. 10 is a diagram of an example of a charging module based on a CAN bus;
FIG. 11 is a diagram of an example of a structure of yet another charging module according to an embodiment of this application;
FIG. 12 is a diagram of an example of a specific structure of a charging module used in a vehicle seat according to an embodiment of this application;
FIG. 13 is a diagram of an example of an interface layout of a first detection subunit according to an embodiment of this application;
FIG. 14 is a diagram of an example of an interface layout of a second detection subunit according to an embodiment of this application;
FIG. 15 is a diagram of an example of a structure of yet another charging module according to an embodiment of this application;
FIG. 16 is a diagram of an example of a structure of another charging module according to an embodiment of this application;
FIG. 17 is a diagram of an example of a structure of still another charging module according to an embodiment of this application;
FIG. 18 is a diagram of an example of a structure of yet another charging module according to an embodiment of this application; and
FIG. 19 is a schematic flowchart of an example of a control method according to an embodiment of this application.

### DESCRIPTION OF EMBODIMENTS

A charging module disclosed in embodiments of this application may be used in a terminal device having a power supply function, and is particularly applicable to a terminal device having a power supply interface detection requirement. The terminal device may be an apparatus having only a power supply function, for example, an in-vehicle charger, a seat charger, or a travel charger. Alternatively, the terminal device may be an apparatus that has a power supply function and further has another function, for example, may include but is not limited to: an intelligent transportation device, for example, a vehicle, a ship, an uncrewed aerial vehicle, a train, a lorry, or a truck; a smart home device, for example, a television, a robotic vacuum cleaner, a smart desk lamp, an acoustic system, an intelligent lighting system, an electrical control system, home background music, a home theater system, an intercom system, or video surveillance; an intelligent manufacturing device, for example, a robot, an industrial device, intelligent logistics, or a smart factory; and an electronic device, for example, a mobile phone, a tablet computer, a palmtop computer, a headset, an acoustic device, a wearable device (for example, a smartwatch), a virtual reality device, an augmented reality device, a desktop computer, a personal computer, or a server. An example of the terminal device includes but is not limited to a terminal device carrying iOS^{®}, Android^{®}, Microsoft^{®}, Harmony^{®}, or another operating system. The terminal device may alternatively be, for example, a laptop computer (Laptop) having a touch-sensitive surface (for example, a touch panel).

The following clearly and completely describes the technical solutions in embodiments of this application with reference to the accompanying drawings in embodiments of this application.

It should be noted that, a "connection" in the following embodiments of this application may be an electrical connection, and a connection between two electrical elements may be a direct connection or an indirect connection between the two electrical elements. For example, that A is connected to B may be that A is directly connected to B, or may be that A is indirectly connected to B through one or more other electrical elements. For example, that A is connected to B may alternatively be that A is directly connected to C, C is directly connected to B, and A and B are connected through C. In some scenarios, the "connection" may alternatively be understood as coupling, for example, electromagnetic coupling between two inductors. In conclusion, the connection between A and B enables transmission of electric energy between A and B.

In addition, an interface name of an electronic element in the following embodiments of this application is merely an example for description, and may be understood as a connection interface or a connection point, configured to connect to another circuit element. In another example, there may be another interface name, connection interface name, or connection point name. For example, in some scenarios, the interface may alternatively be referred to as an end, a communication end, an information transmission end, a terminal, a connection end, a communication connection end, an information connection end, a connection point, a communication connection point, an information connection point, or an electrode.

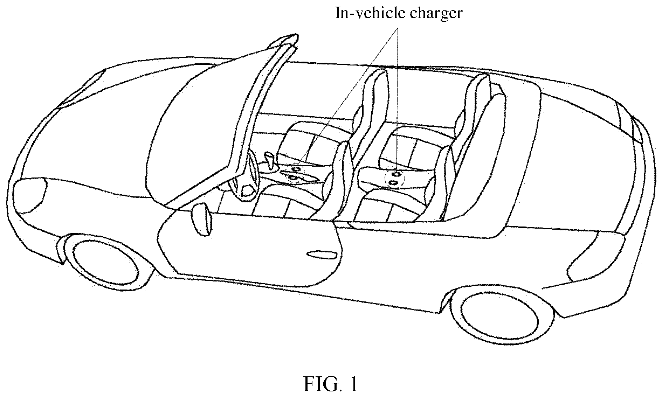

Embodiments of this application disclose a charging module. In an application scenario, the charging module may be used in an in-vehicle device, for example, an in-vehicle charger. FIG. 1 is a diagram of an example of an application scenario of an in-vehicle charger according to an embodiment of this application. In this scenario, a vehicle is a four-seat car, and a corresponding in-vehicle charger is disposed near each seat of the car. For example, two rows of in-vehicle chargers are disposed between a driver seat and a front passenger seat, and two rows of in-vehicle chargers are disposed between rear-row seats. It should be understood that, in addition to the in-vehicle charger, another device may be disposed in the vehicle, for example, a data interface, a navigator, or a dashcam. In-vehicle chargers are respectively disposed near different seats. When a user sitting on a seat has a charging requirement, the user may directly insert a to-be-charged device into a nearby in-vehicle charger closest to the user without moving a body to a far place for charging. In this way, in-vehicle charging can be implemented more conveniently, and vehicle use experience is effectively improved.

It should be noted that a quantity and locations of the foregoing in-vehicle chargers are merely examples. A specific quantity of in-vehicle chargers included in a vehicle and a specific location of each in-vehicle charger are not limited in embodiments of this application. For example, in another example, to save space inside the vehicle, the in-vehicle chargers may alternatively be disposed on an interior cavity of a vehicle body. For example, the four-seat car in FIG. 1 is still used as an example. The in-vehicle chargers near the driver seat and the front passenger seat may be respectively disposed on inner sides of left and right vehicle doors, or may be disposed on one side of a vehicle dashboard, and the in-vehicle chargers near the rear-row seats may be disposed on inner sides of a vehicle frame on two sides of the rear-row seats, or may be disposed in a backrest gap behind the rear-row seats. This is not specifically limited. In still another example, to meet a plurality of power supply requirements of a same user in a same time period, a plurality of in-vehicle chargers may be correspondingly disposed at one location. For example, two in-vehicle chargers are disposed beside the front passenger seat, so that a user sitting on the front passenger seat can charge two user equipments (for example, a mobile phone and a computer) at the same time. In addition, the in-vehicle charger may be a wired charger shown in FIG. 1 and is externally presented as a wired interface, or may be a wireless charger and is externally presented as a charging cradle without an interface. This is not specifically limited in embodiments of this application.

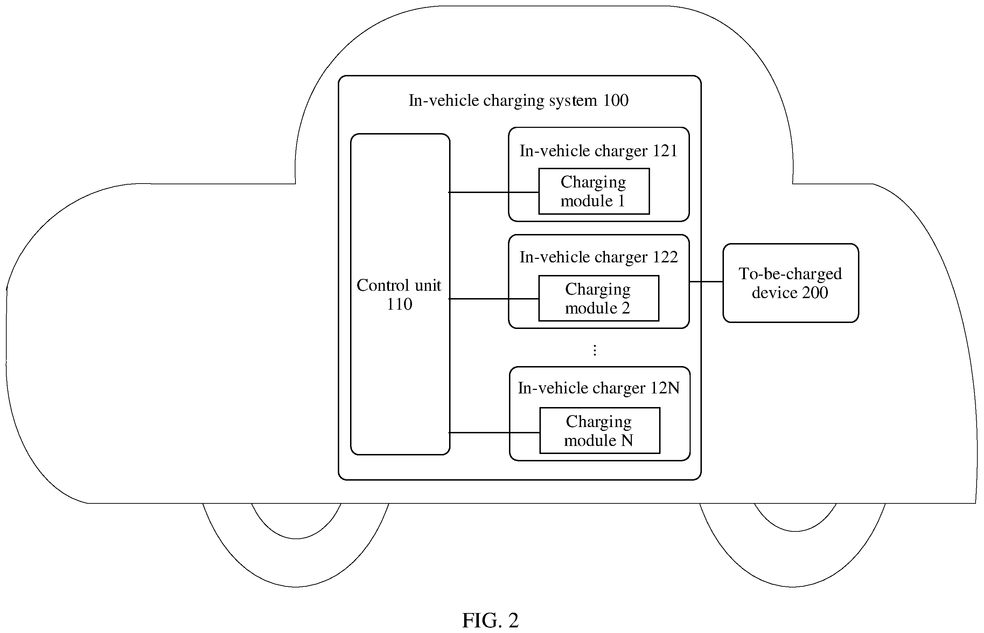

Further, for example, FIG. 2 is a diagram of an architecture of an in-vehicle charging system according to an embodiment of this application. As shown in FIG. 2, the in-vehicle charging system 100 may include a control unit 110 and N in-vehicle chargers, such as an in-vehicle charger 121, an in-vehicle charger 122, ..., and an in-vehicle charger 12N, where N is any positive integer. Each in-vehicle charger includes a charging module. For example, the in-vehicle charger 121 includes a charging module 1, the in-vehicle charger 122 includes a charging module 2, ..., and the in-vehicle charger 12N includes a charging module N. It should be noted that each in-vehicle charger may include only one charging module, or may include a plurality of charging modules. In addition, the in-vehicle charger may further include some other components in addition to the charging module, such as a housing and a circuit board. For example, the circuit board may be a printed circuit board (printed circuit board, PCB), and is configured to carry the charging module. The housing may be a metal housing or a non-metal housing, may be manufactured by using a process like polishing, electroplating, or laser engraving, and is configured to accommodate the circuit board and the charging module.

In this embodiment of this application, a to-be-charged device 200 may be connected to an in-vehicle charger to implement an in-vehicle charging function. In addition, the charging module in each in-vehicle charger may be further connected to the control unit 110, and a connection manner may be a wired connection or a wireless connection. In specific implementation, the charging module may have a charging interface detection function and a charging interface reporting function. In an example, the detection function may be implemented by monitoring an electrical signal status of the in-vehicle charger in which the charging module is located. For example, still refer to FIG. 2. When the to-be-charged device 200 is connected to the in-vehicle charger 122, the in-vehicle charger 122 supplies power to the to-be-charged device 200. In this case, because a load of the in-vehicle charger 122 changes, an electrical signal status (for example, a current or a voltage) inside the in-vehicle charger 122 also changes. In this way, after monitoring change information of the electrical signal status, the charging module 2 may determine that the to-be-charged device 200 is connected to the in-vehicle charger 122 in which the charging module 2 is located, and then the charging module 2 may send, to the control unit 110, a message indicating that the to-be-charged device 200 is connected to the in-vehicle charger 122. The message indicates a connection location of the to-be-charged device 200. In this way, when the control unit 110 receives a control instruction sent by the to-be-charged device 200, the control unit 110 may adjust a device near the connection location in a targeted manner based on the control instruction, to provide a targeted service for a user using the in-vehicle charger 122 for charging.

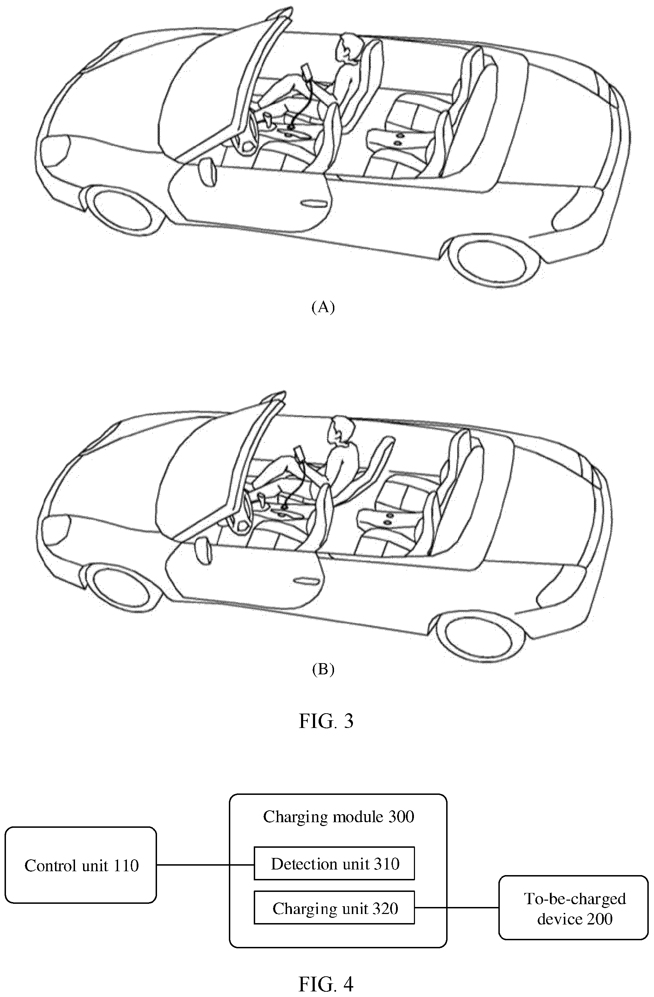

In the field of internet of vehicles, the foregoing service may be a service related to a vehicle component, for example, may be adjusting a seat angle, adjusting a position of an air exhaust vent of an air conditioner, or adjusting brightness of a vehicle light. For example, FIG. 3 is a diagram of an application scenario in the in-vehicle field according to an embodiment of this application. A control unit in the field may be an in-vehicle controller, and the in-vehicle controller is further connected to each domain controller in a vehicle, including but not limited to a cockpit domain controller, a powertrain domain controller, a body electronics domain controller, an advanced driver assistance system domain controller, or the like. As shown in (A) in FIG. 3, after a user sitting on a front passenger seat connects a mobile phone to an in-vehicle charger beside the front passenger seat through a charging cable, a charging module in the in-vehicle charger notifies the in-vehicle controller of connection location information. In this way, when the user sends a seat adjustment instruction to the in-vehicle controller by using the mobile phone, the in-vehicle controller may control, by using the cockpit domain controller, a seat near the in-vehicle charger, namely, the front passenger seat, to perform angle adjustment, where an adjusted cockpit is shown in (B) in FIG. 3.

It should be noted that the control unit 110 may include at least one integrated circuit chip. For example, the control unit 110 may include at least one processor, and when the control unit 110 includes a plurality of processors, types of the included processors may be the same or different. The processor is an element or circuit having a processing capability, for example, including one or more of the following types: a general-purpose processor, a field programmable gate array (field programmable gate array, FPGA), an application-specific integrated circuit (application-specific integrated circuit, ASIC), a neural-network processing unit (neural-network processing unit, NPU), a graphics processing unit (graphics processing unit, GPU), an application processor (application processor, AP), a modem processor, an image signal processor (image signal processor, ISP), a video codec, a digital signal processor (digital signal processor, DSP), a baseband processor, a network processor (network processor, NP), a microcontroller unit (microcontroller unit, MCU), a programmable control device (programmable logic device, PLD) or another programmable logic device, a discrete gate or transistor logic device, a discrete hardware component, or another integrated chip. The general-purpose processor includes, for example, a central processing unit (central processing unit, CPU). In addition, all or some integrated circuit chips included in the control unit 110 may be integrated together and presented in a form of a system on chip (system on chip, SoC).

The following describes, through specific embodiments, specific implementation of the charging module provided in embodiments of this application.

FIG. 4 is a diagram of an example of a structure of a charging module according to an embodiment of this application. As shown in FIG. 4, the charging module 300 includes a detection unit 310 and a charging unit 320. The detection unit 310 is connected to a control unit 110, and the charging unit 320 is connected to a to-be-charged device 200. During implementation, after the to-be-charged device 200 is connected to the charging unit 320, the charging unit 320 supplies power to the to-be-charged device 200, and the detection unit 310 sends connection location information of the to-be-charged device 200 to the control unit 100. It may be learned that the charging module 300 can not only supply power to the to-be-charged device 200, but also detect a connection location of the to-be-charged device 200, and report the connection location to the control unit 110, so that the control unit 110 provides, based on the connection location, a targeted service for a user using the to-be-charged device 200.

In this embodiment of this application, the charging unit 320 may be any component or a combination of components that can implement a power supply capability, for example, may include but is not limited to an in-vehicle charging case, a storage battery, a battery, a portable charger, a charging pile, and a DC/DC converter.

In this embodiment of this application, the detection unit may be any component or a combination of components that can implement a connection detection capability. Specifically, the detection unit may be a device that can detect a load change or an electrical signal change of the charging module 300, for example, a resistance detector, a voltmeter, or an ammeter.

In a possible implementation, the connection location information is an electrical signal generated by the detection unit triggered when the to-be-charged device is connected to the detection unit.

It should be noted that the foregoing connection may be a contact connection or a non-contact connection, or may be a wired connection or a wireless connection. This is not specifically limited.

In addition, a charging manner between the charging unit 320 and the to-be-charged device 200 may be forward charging described in the foregoing content. That is, the charging unit 320 supplies power to the to-be-charged device 200. Alternatively, the charging manner may be reverse charging. That is, the to-be-charged device 200 supplies power to the charging unit 320. Regardless of forward charging or reverse charging, as long as the to-be-charged device 200 is connected to the charging module 300, the detection unit 310 in the charging module 300 may detect the connection location information of the to-be-charged device 200, and report the connection location information to the control unit 110, so that the control unit 110 provides, based on the connection location information, a targeted service for the user using the to-be-charged device 200.

The following describes several possible specific implementations of the charging module 300 in this embodiment of this application.

### Implementation solution 1

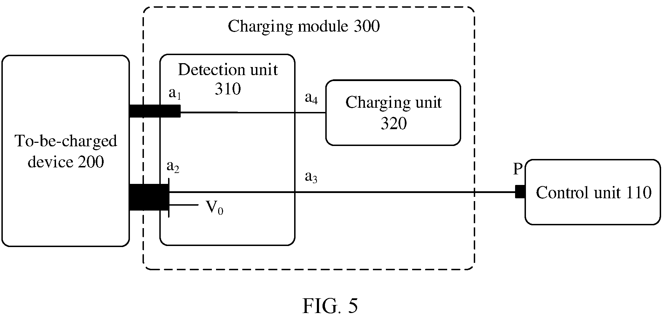

FIG. 5 is a diagram of an example of a structure of a charging module according to an embodiment of this application. As shown in FIG. 5, in this example, the charging module 300 includes a detection unit 310 and a charging unit 320. The detection unit 310 specifically includes a first interface (a₁), a second interface (a₂), a third interface (a₃), and a fourth interface (a₄). The first interface a₁ communicates with the fourth interface a₄, and the second interface a₂ communicates with the third interface a₃. The first interface a₁ of the detection unit 310 is configured to connect to a to-be-charged device 200, the second interface a₂ of the detection unit 310 is configured to connect to the to-be-charged device 200 and provide a reference signal V₀, the third interface a₃ of the detection unit 310 is configured to connect to a control unit 110, and the fourth interface a₄ of the detection unit 310 is configured to connect to the charging unit 320.

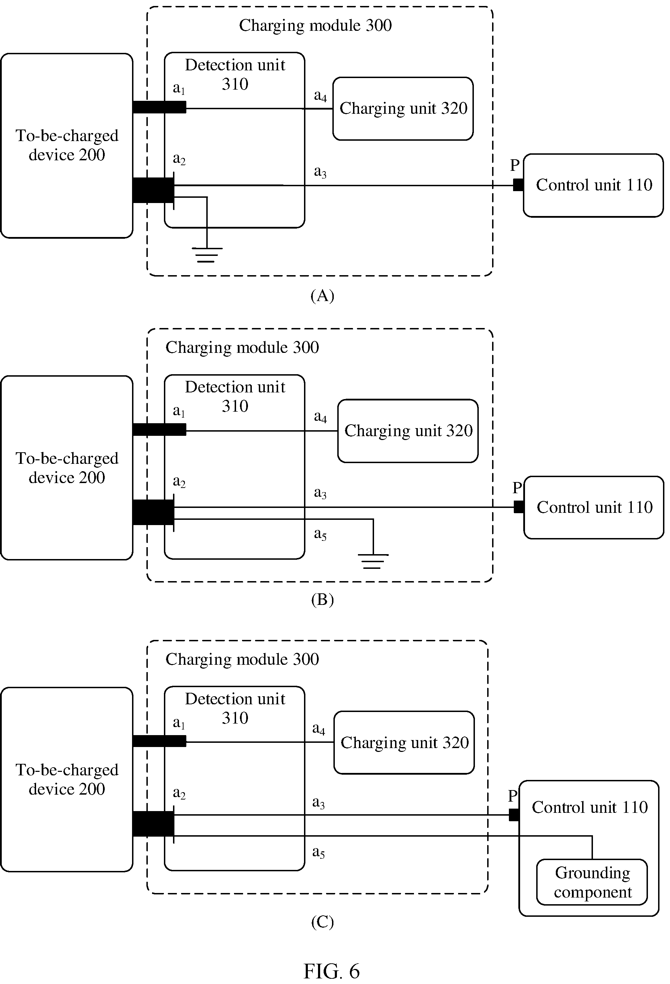

For example, the reference signal V₀ may be specifically a ground signal, that is, a low-level signal. FIG. 6 is a diagram of an example of several manners of providing a ground signal according to an embodiment of this application. As shown in (A) to (C) in FIG. 6:

In an implementation form, with reference to (A) in FIG. 6, the second interface a₂ of the detection unit 310 is directly grounded. In this way, the second interface a₂ may directly obtain a ground signal.

In another implementation form, with reference to (B) in FIG. 6, the detection unit 310 further includes a fifth interface a₅, the second interface a₂ communicates with the fifth interface a₅, and the fifth interface as is directly grounded. In this way, a ground signal may be transmitted to the second interface a₂ through the fifth interface a₅.

In still another implementation form, with reference to (C) in FIG. 6, the detection unit 310 further includes a fifth interface a₅, the second interface a₂ communicates with the fifth interface a₅, and the fifth interface as is connected to a grounding component in the control unit 110. In this way, a ground signal may be transmitted by the grounding component in the control unit 110 to the second interface a₂ through the fifth interface a₅. Specifically, in the field of internet of vehicles, the fifth interface a₅ may be grounded by being connected to a grounding component in the cockpit domain controller.

It should be understood that the foregoing merely describes several possible grounding manners as an example, and there may be another implementation in another embodiment. This is not specifically limited in embodiments of this application.

In the foregoing example, a reference signal, for example, a ground signal, may provide a unified reference potential for the detection unit, to reduce environmental interference and improve accuracy and reliability of detection performed by the detection unit.

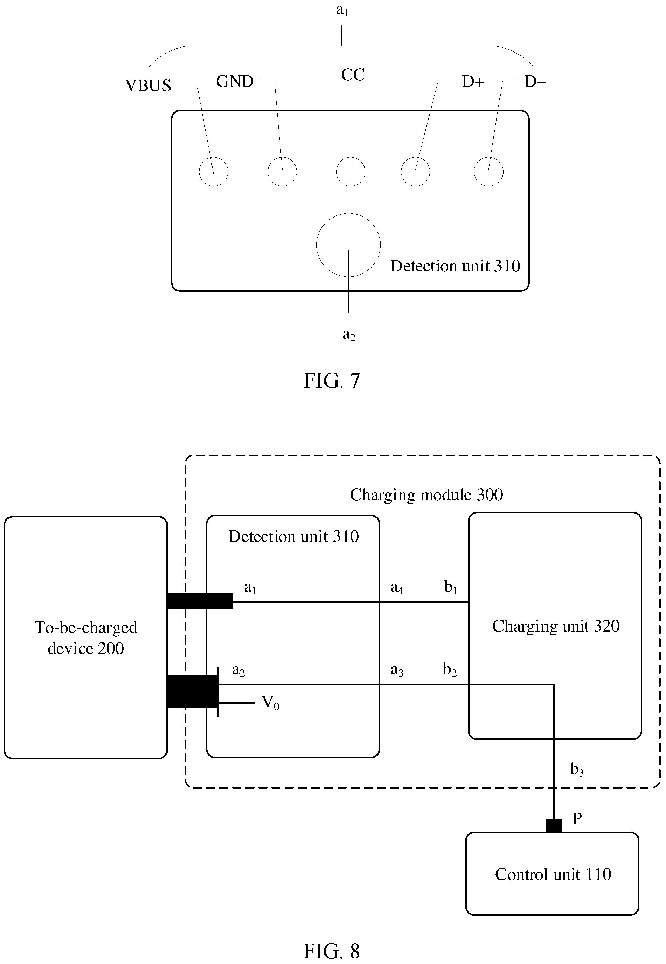

In this embodiment of this application, the first interface a₁ of the detection unit 310 may include a power interface and at least one type of charging protocol communication interface. The power interface may be, for example, a VBUS interface and a GND interface. The two interfaces form a power loop when working, to provide support for supply of power to the to-be-charged device 200. The charging protocol communication interface may be, for example, one or more of a CC interface, a D+ interface, a D- interface, or another type of charging protocol communication interface. The CC interface belongs to a PD fast charging protocol interface, and the D+ interface and the D- interface belong to a QC fast charging/Huawei fast charging protocol interface. In an example, FIG. 7 is a diagram of interface presentation of a detection unit according to an embodiment of this application. As shown in FIG. 7, in addition to a VBUS interface and a GND interface, the first interface a₁ of the detection unit 310 includes a CC interface, a D+ interface, and a D- interface. In this way, the charging module 300 can adapt to a plurality of mainstream fast charging protocols such as PD fast charging, QC fast charging, or HW fast charging, thereby greatly improving universality of the charging module 300.

It should be understood that, in addition to the foregoing power interface and the charging protocol communication interface, the first interface a₁ may include another type of interface. This is not specifically limited in embodiments of this application.

In this embodiment of this application, the second interface a₂ of the detection unit 310 may be presented in a contact type, a button type, a magnetic attachment type, a buckle type, or another presentation form that can implement an on/off function. This is not specifically limited.

Still refer to FIG. 5. In this embodiment of this application, the third interface a₃ of the detection unit 310 may be connected to a detection interface (P) in the control unit 110 through a hard wire. The hard wire is a wire that can transmit a level signal, that is, any conductive wire. In a specific example, the hard wire may be an I/O wire, and the I/O wire is a weak electrical wire and is configured to transmit a level signal with an irregular frequency and a random amplitude. The detection interface P may be an original detection interface in the control unit 110, or may be a detection interface that is additionally provided in the control unit 110 when the control unit 110 does not have a detection interface. For example, in the field of internet of vehicles technologies, the detection interface P may be specifically a data import interface (distribution interface, DI) in an in-vehicle controller. During implementation, the detection interface P may determine, based on an electrical signal status at the third interface a₃, whether the to-be-charged device is connected to the charging module 300. For example, after the to-be-charged device 200 is connected to the charging module 300, the to-be-charged device 200, as a load, is connected to a loop formed by the detection interface P, the second interface a₂, and the reference signal V₀. Because a load in the loop changes, an electrical signal that is detected by the detection interface P and that is of the third interface a₃ relative to the reference signal V₀ changes. Therefore, the control unit 110 may determine, based on the change of the electrical signal, that the to-be-charged device 200 is connected to the charging module 300. In this way, the detection interface in the control unit is used to cooperate with the charging module to implement a detection function, so that the charging module and the control unit only need to be connected through a conductive wire, and do not need to perform communicative interaction. Therefore, communication overheads can be reduced, and a requirement on the control unit can be further lowered, thereby helping reduce costs.

In the foregoing implementation solution 1, the detection unit 310 serves as a bridge connecting the charging unit 320 and the to-be-charged device 200, and can implement electric energy transmission between the charging unit and the to-be-charged device. As a bridge connecting the to-be-charged device 200 and the control unit 110, the detection unit 310 can further send, to the control unit 110, an electrical signal status of the to-be-charged device 200 after the to-be-charged device 200 is connected, which helps the control unit learn of a connection status of the to-be-charged device based on the electrical signal status. In addition, the charging unit 320 can be directly compatible with an existing charger without being improved in this solution. For example, when the solution is applied to an in-vehicle charger, there is an only need to connect the fourth interface a₄ of the charging module 300 to a charging case and connect the third interface a₃ of the charging module 300 to the detection interface P of the control unit 110. In this way, the in-vehicle charger that originally has only a charging function can additionally have a detection function, and can further obtain information such as a location of the to-be-charged device during charging, so that the in-vehicle control unit provides a targeted service for a user near the to-be-charged device that is currently being charged.

### Implementation solution 2

FIG. 8 is a diagram of an example of a structure of another charging module according to an embodiment of this application. As shown in FIG. 8, in this example, the charging module 300 includes a detection unit 310 and a charging unit 320. The detection unit 310 includes a first interface (a₁), a second interface (a₂), a third interface (a₃), and a fourth interface (a₄). The charging unit 320 includes a first interface (b₁), a second interface (b₂), and a third interface (b₃). The first interface a₁ of the detection unit 310 is connected to the first interface b₁ of the charging unit 320 after being in communication with the fourth interface a₄ of the detection unit 310. The second interface a₂ of the detection unit 310 is connected to the second interface b₂ of the charging unit 320 after being in communication with the third interface a₃ of the detection unit 310. The second interface b₂ of the charging unit 320 is further connected to the third interface b₃ of the charging unit 320. The first interface a₁ of the detection unit 310 is configured to connect to a to-be-charged device 200, the second interface a₂ of the detection unit 310 is configured to connect to the to-be-charged device 200 and provide a reference signal V₀, and the third interface b₃ of the charging unit 320 is connected to a control unit 110.

Still refer to FIG. 8. In this embodiment of this application, the third interface b₃ of the charging unit 320 may be connected to a detection interface P in the control unit 110 through a hard wire. In this way, after the to-be-charged device 200 is connected to the charging module 300, the to-be-charged device 200, as a load, is connected to a circuit in which the reference signal V₀, the second interface a₂ of the detection unit 310, the third interface a₃ of the detection unit 310, the second interface b₂ of the charging unit 320, the third interface b₃ of the charging unit 320, and the detection interface P are located. In this case, a load in the circuit changes, and an electrical signal that is detected by the detection interface P and that is of the third interface b₃ of the charging unit 320 relative to the reference signal V₀ changes. Therefore, the control unit 110 may determine, based on the change of the electrical signal, that the to-be-charged device 200 is connected to the charging module 300.

In the foregoing implementation solution 2, the charging unit serves as a bridge connecting the detection unit and the control unit, and can forward, to the control unit, an electrical signal status of the to-be-charged device connected to the detection unit, to implement a function of connection detection for the to-be-charged device by using the original detection interface in the control unit, so that the control unit can provide a more targeted service for a user using the to-be-charged device. In addition, in the implementation solution 2, for the first interface a₁ and the second interface a₂ of the detection unit 310 and the detection interface P of the control unit 110, directly refer to the foregoing implementation solution 1. Details are not described herein again.

### Implementation solution 3

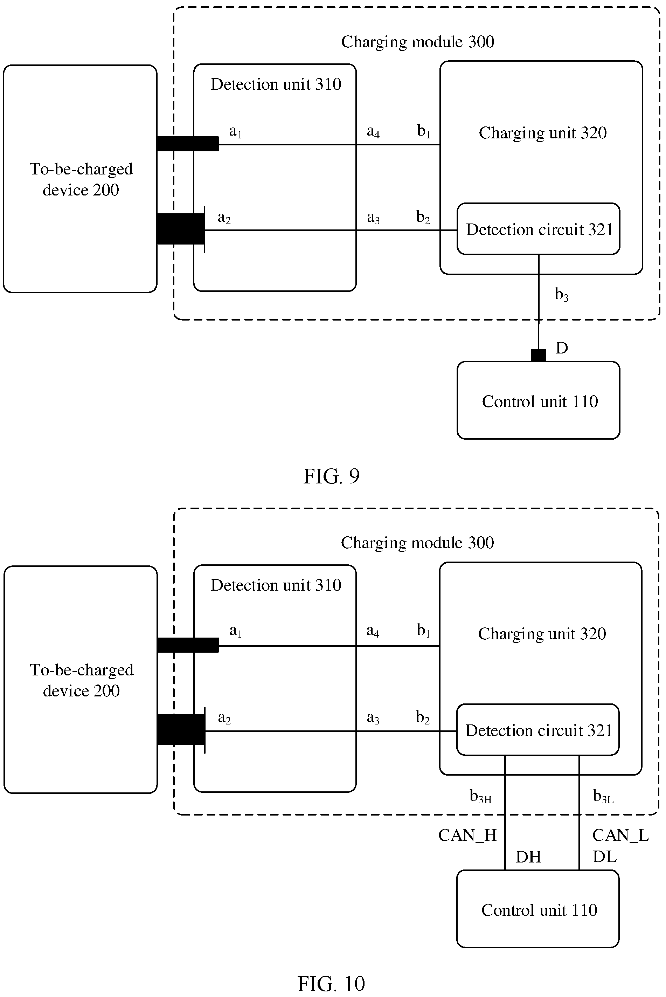

FIG. 9 is a diagram of an example of a structure of still another charging module according to an embodiment of this application. As shown in FIG. 9, in this example, the charging module 300 includes a detection unit 310 and a charging unit 320. The detection unit 310 includes a first interface (a₁), a second interface (a₂), a third interface (a₃), and a fourth interface (a₄). The charging unit 320 includes a detection circuit 321, a first interface (b₁), a second interface (b₂), and a third interface (b₃). The first interface a₁ of the detection unit 310 is connected to the first interface b₁ of the charging unit 320 after being in communication with the fourth interface a₄ of the detection unit 310. The second interface a₂ of the detection unit 310 is connected to the second interface b₂ of the charging unit 320 after being in communication with the third interface a₃ of the detection unit 310. A first end (a left end shown in the figure) of the detection circuit 321 corresponds to the second interface b₂ of the charging unit 320, and a second end (a right end shown in the figure) of the detection circuit 321 corresponds to the third interface b₃ of the charging unit 320. The first interface a₁ of the detection unit 310 and the second interface a₂ of the detection unit 310 are connected to a to-be-charged device 200, and the third interface b₃ of the charging unit 320 is connected to a control unit 110.

Still refer to FIG. 9. In this embodiment of this application, the detection circuit 321 includes a communication module, and may be connected to a data interface (D) in the control unit 110 through a data line. The data line may be a conductive wire having a data transmission capability or a communication capability. The data interface D may be an original data interface in the control unit 110, or may be a data interface that is additionally provided in the control unit 110 when the control unit 110 does not have a data interface. During implementation, after the to-be-charged device 200 is connected to the charging module 300, the to-be-charged device 200, as a load, is connected to a circuit in which the second interface a₂ of the detection unit 310, the third interface a₃ of the detection unit 310, and the second interface b₂ of the charging unit 320 are located. In this case, a load in the circuit changes. Therefore, the detection circuit 321 may determine that the to-be-charged device 200 is connected to the charging module 300 by detecting that an electrical signal at the second interface b₂ of the charging unit 320 changes, and then the detection circuit 321 may send connection location information to the control unit 110 through the third interface b₃ of the charging unit 320, so that the control unit 110 can provide a service for a user using the to-be-charged device 200.

In this embodiment of this application, the data line between the detection circuit 321 and the control unit 110 may be a data line that supports any one or more communication protocols. Specifically, the data line may be one of the following buses: a CAN bus, an LIN bus, an ETH bus, an I2C bus, an SPI bus, a onewire, a UART bus, or a JTAG bus, or may be another user-defined proprietary protocol bus. This is not specifically limited. Correspondingly, a communication module that matches a communication protocol supported by the data line is encapsulated in the detection circuit 321, so that the charging unit 320 can implement the connection location information of the to-be-charged device 200 by using the detection circuit 321 and can send the information to the control unit 110.

For example, FIG. 10 is a diagram of a charging module based on a CAN bus. As shown in FIG. 10, the CAN bus includes a CAN_H line and a CAN_L line. Correspondingly, the third interface b₃ of the charging unit 320 specifically includes an interface b_{3H} and an interface b_{3L}. The data interface D of the control unit 110 specifically includes an interface DH and an interface DL. The interface b_{3H} is connected to the interface DH through the CAN_H line, and the interface b_{3L} is connected to the interface DL through the CAN_L line. In this way, when the to-be-charged device 200 is connected to the charging module 300, the detection circuit 321 may send the connection location information to the control unit 110 through the CAN_H line and the CAN_L line.

In the foregoing implementation solution 3, the charging unit has both a detection function and a communication function. As a bridge connecting the detection unit and the control unit, the charging unit can forward the connection location information to the control unit after detecting that the to-be-charged device is connected to the detection unit, so that the control unit can provide a more targeted service for a user using the to-be-charged device. In addition, in the foregoing implementation solution 3, for the first interface a₁, the second interface a₂, and the like of the detection unit 310, refer to the foregoing implementation solution 1. Details are not described herein again.

### Implementation solution 4

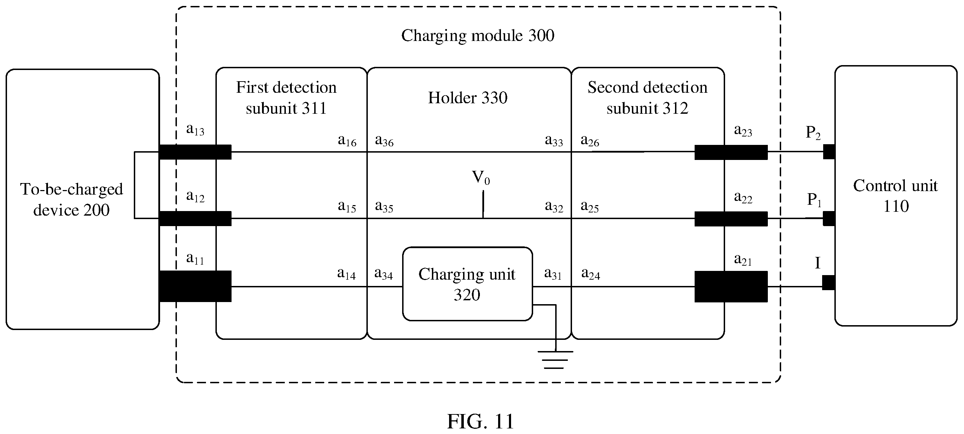

FIG. 11 is a diagram of an example of a structure of yet another charging module according to an embodiment of this application. As shown in FIG. 11, in this example, the charging module 300 includes a detection unit 310, a charging unit 320, and a holder 330. The charging unit 320 is securely disposed on the holder 330, and is configured to supply power to a connected to-be-charged device 200. The detection unit 310 specifically includes a first detection subunit 311 and a second detection subunit 312. The first detection subunit 311 is configured to connect the to-be-charged device 200 to the holder 330, and is configured to send connection location information of the to-be-charged device 200 to the control unit 110. The second detection subunit 312 is configured to connect the holder 330 to the control unit 110, and is configured to send connection location information of the holder 330 to a control unit 110. The holder 330 and the first detection subunit 311 form a mobile charging apparatus. When the mobile charging apparatus is inserted into the control unit 110, the second detection subunit 312 connected to the control unit 110 may report detected connection location information of the mobile charging apparatus to the control unit 110. Further, when the to-be-charged device 200 is connected to the mobile charging apparatus, the first detection subunit 311 disposed in the mobile charging apparatus can further send the connection location information of the to-be-charged device 200 to the control unit 110 by using the second detection subunit 312. It may be learned that the charging module 300 can implement connection detection for both the mobile charging apparatus and the to-be-charged device 200.

Further, for example, still refer to FIG. 11. The first detection subunit 311 includes a first interface a₁₁, a second interface a₁₂, and a third interface a₁₃, and the second detection subunit 312 includes a first interface a₂₁, a second interface a₂₂, and a third interface a₂₃. One end of the first interface a₁₁ of the first detection subunit 311 is configured to connect to the to-be-charged device 200, the other end of the first interface a₁₁ of the first detection subunit 311 is connected to a first end of the charging unit 320 through interfaces and wiring on the first detection subunit 311 and the holder 330, a second end of the charging unit 320 is connected to one end of the first interface a₂₁ of the second detection subunit 312 through interfaces and wiring on the holder 330 and the second detection subunit 312, and the other end of the first interface a₂₁ of the second detection subunit 312 is connected to a charging interface I of the control unit 110. One end of the second interface a₁₂ of the first detection subunit 311 is configured to connect to the to-be-charged device 200, the other end of the second interface a₁₂ of the first detection subunit 311 is connected to one end of the second interface a₂₂ of the second detection subunit 312 through interfaces and wiring on the first detection subunit 311, the holder 330, and the second detection subunit 312, and the other end of the second interface a₂₂ of the second detection subunit 312 is connected to a first detection interface P₁ of the control unit 110. One end of the third interface a₁₃ of the first detection subunit 311 is configured to connect to the to-be-charged device 200, the other end of the third interface a₁₃ of the first detection subunit 311 is connected to the third interface a₂₃ of the second detection subunit 312 through the interfaces and the wiring on the first detection subunit 311, the holder 330, and the second detection subunit 312, and the other end of the third interface a₂₃ of the second detection subunit 312 is connected to a second detection interface P₂ of the control unit 110. In addition, the second interface a₁₂ of the first detection subunit 311 and the second interface a₂₂ of the second detection subunit 312 are further configured to receive a reference signal V₀.

It should be noted that settings of the interfaces and wiring on the first detection subunit 311, the holder 330, and the second detection subunit 312 may specifically refer to: The first detection subunit 311 further includes a fourth interface a₁₄, a fifth interface a₁₅, and a sixth interface a₁₆. The second detection subunit 312 further includes a fourth interface a₂₄, a fifth interface a₂₅, and a sixth interface a₂₆. Correspondingly, the holder 330 includes a first interface a₃₁, a second interface a₃₂, a third interface a₃₃, a fourth interface a₃₄, a fifth interface a₃₅, and a sixth interface a₃₆. The first interface a₃₁, the second interface a₃₂, and the third interface a₃₃ of the holder 330 respectively communicate with the fourth interface a₂₄, the fifth interface a₂₅, and the sixth interface a₂₆ of the second detection subunit 312, and the fourth interface a₃₄, the fifth interface a₃₅, and the sixth interface a₃₆ of the holder 330 respectively communicate with the fourth interface a₁₄, the fifth interface a₁₅, and the sixth interface a₁₆ of the first detection subunit 311. It may be learned that, as a device for implementing communication between the first detection subunit 311 and the second detection subunit 312, the holder 330 is configured to implement a fastening function after the two detection subunits are inserted.

Based on the foregoing content, the charging unit 320 and the first detection subunit 311 form a mobile charging apparatus. When the mobile charging apparatus is inserted into the second detection subunit 312, the holder 330 is connected to a loop formed by the reference signal V₀, the second interface a₂₂ of the second detection subunit 312, and the first detection interface P₁ of the control unit, so that a load in the loop changes, and the control unit 110 detects, through the first detection interface P₁, a change of an electrical signal status at the second interface a₂₂ of the second detection subunit 312, to learn that the holder is connected to the second detection unit 312. Further, in the case that the holder is connected to the charging module 300, when the to-be-charged device 200 is inserted into the first detection subunit 311, the to-be-charged device 200 is connected to a loop formed by the reference signal V₀, the second interface a₁₂ of the first detection subunit 311, the third interface a₁₃ of the first detection subunit 311, the third interface a₂₃ of the second detection subunit 312, and the second detection interface P₂ of the control unit 110, so that a load in the loop changes, and the control unit 110 detects, through the second detection interface P₂, a change of an electrical signal status at the third interface a₂₃ of the second detection subunit 312, to learn that the to-be-charged device is connected to the holder 330. In this way, when there is a need, the holder 330 may be inserted into the second detection subunit 312, and the to-be-charged device 200 may be inserted into the first detection subunit 311 of the holder 330, so that the to-be-charged device 200 may be charged by using the charging unit in the movable holder 330. Further, after charging is completed, the to-be-charged device 200 may be removed from the first detection subunit 311 of the holder 330, and the holder 330 may be removed from the second detection subunit 312.

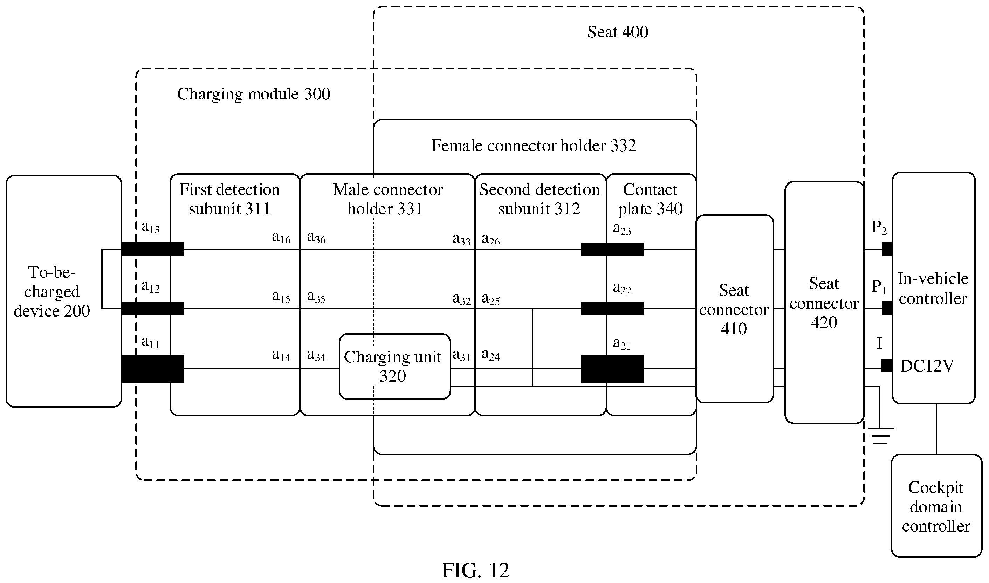

In a specific application scenario, the charging module 300 may be disposed on a vehicle seat, for example, at a back position of the vehicle seat. FIG. 12 is a diagram of an example of a specific structure of a charging module used in a vehicle seat according to an embodiment of this application. As shown in FIG. 12, in this example, the second detection subunit 312 is securely disposed in a seat 400, and the seat 400 further includes a contact plate 340 and at least one seat connector, for example, a seat connector 410 and a seat connector 420. The seat connector 410 is configured to connect to the seat connector 420, so that when the seat connector 420 is disposed at a far position, the seat connector can be extended to a position of the seat connector 410 by using the seat connector 410 and a conductive wire disposed between the seat connector 410 and the seat connector 420. Correspondingly, the contact plate 340 is configured to implement a connection between the second detection subunit 312 and the seat connector 410. In this way, even if ends that are of the second detection subunit 312 and the seat connector 410 and that are to be connected are both male connectors or female connectors, the connection between the second detection subunit 312 and the seat connector 410 can still be implemented through the contact plate 340.

Further, still refer to FIG. 12. The charging unit 320 may further include a third end, and the third end is grounded. For example, the third end may be grounded through interfaces and wiring on the holder 330, the second detection subunit 312, the contact plate 340, the seat connector 410, and the seat connector 420. The grounding may be directly grounding, or may be implemented through a connection to a grounding component in an in-vehicle controller. This is not limited. Based on this, the reference signal V₀ may be specifically a ground signal, and the ground signal may be implemented in a manner that the second interface a₂₂ of the second detection subunit 312 communicates with the third end of the charging unit 320, to enable a ground signal generated by the charging unit 320 on a ground link to be synchronized to the second interface a₂₂ of the second detection subunit 312. It should be understood that this grounding manner is merely an example. Any solution that can implement grounding of the second interface a₂₂ falls within the protection scope of embodiments of this application. This is not specifically limited in embodiments of this application.

Further, still refer to FIG. 12. A charging interface of the in-vehicle controller may be specifically a charging interface that provides DC12V, and the charging unit 320 may be specifically a DC/DC converter. The DC/DC converter is connected to a DC12V charging interface on the in-vehicle controller through the first interface a₃₁ of the holder 330, the fourth interface a₂₄ of the second detection subunit 312, the first interface a₂₁ of the second detection subunit 312, and interfaces and wiring on the contact plate 340, the seat connector 410, and the seat connector 420. In this way, after the to-be-charged device 200 is connected, the DC/DC converter may perform direct current/direct current conversion on an electrical signal provided by the DC12V charging interface on the in-vehicle controller, and then provide a converted electrical signal to the to-be-charged device 200.

Further, still refer to FIG. 12. The holder 330 specifically includes a male connector holder 331 and a female connector holder 332. The male connector holder 331 is configured to carry the charging unit 320, and the male connector holder 331 includes the first interface a₃₁ to the sixth interface a₃₆ described in the foregoing content. The male connector holder 331 is inserted into the first detection subunit 311 and the second detection subunit 312 through the first interface a₃₁ to the sixth interface a₃₆. Correspondingly, the female connector holder 332 is configured to carry the contact plate 340 and the second detection subunit 312, and is configured to implement insertion with the seat connector 410. In this design, the to-be-charged device 200 is connected to the male connector holder 331 by using the first detection subunit 311, the seat connector 410 is connected to the second detection subunit 312 by using the female connector holder 332, the seat connector 410 is connected to the in-vehicle controller through a hard wire after being connected to the seat connector 420, and finally the in-vehicle controller interacts with a cockpit domain controller through a data line. In this way, in this design, the first detection subunit 311 is used as an external unit of the male connector holder 331, and the first detection subunit 312 is used as an external unit of the female connector holder 332, to respectively implement connections to the to-be-charged device 200 and the seat connector 410, so that a function of charging the to-be-charged device 200, a function of detecting whether the to-be-charged device 200 is connected, and a function of detecting whether the holder 330 is connected can be provided.

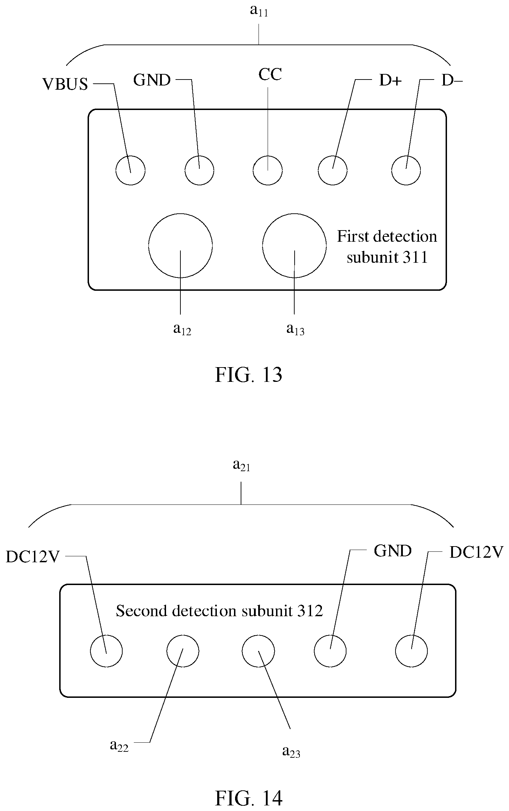

Based on the charging module shown in FIG. 12, FIG. 13 is a diagram of an example of an interface layout of a first detection subunit according to an embodiment of this application. As shown in FIG. 13, the first interface a₁₁ of the first detection subunit 311 may include a power interface and at least one type of charging protocol communication interface, for example, the VBUS interface and the GND interface, and at least one of the CC interface, the D+ interface, and the D- interface, or may further include another type of interface. The second interface a₁₂ and the third interface a₁₃ of the first detection subunit 311 may be presented in a contact type, a button type, a magnetic attachment type, a buckle type, or another presentation form that can implement an on/off function. For specific content of these interfaces, refer to the foregoing implementation 1. Details are not described herein again.

Based on the charging module shown in FIG. 12, FIG. 14 is a diagram of an example of an interface layout of a second detection subunit according to an embodiment of this application. As shown in FIG. 14, the first interface a₂₁ of the second detection subunit 321 may include a ground interface and at least one direct current interface. The ground interface is the foregoing GND interface, and the direct current interface is the foregoing DC12V interface. In a specific example, the second detection subunit 321 may include two DC12V interfaces. The two DC12V interfaces are configured to implement forward charging and reverse charging. In other words, regardless of whether the to-be-charged device 200 is connected to the holder 330 in a forward or reverse manner, the charging unit 310 can charge the to-be-charged device 200. In addition, the second interface a₂₂ and the third interface a₂₃ of the second detection subunit 312 may also be presented in a contact type, a button type, a magnetic attachment type, a buckle type, or another presentation form that can implement an on/off function. For specific content of these interfaces, refer to the foregoing implementation 1. Details are not described herein again.

In the foregoing implementation 4, the holder carries the charging unit, and two detection subunits are disposed, so that connection detection for the movable holder and connection detection for the to-be-charged device can be respectively implemented. This helps implement, based on implementation of a movable charging apparatus, a function of detecting whether the movable apparatus is connected to a seat and a function of detecting whether the to-be-charged device is connected to the movable device.

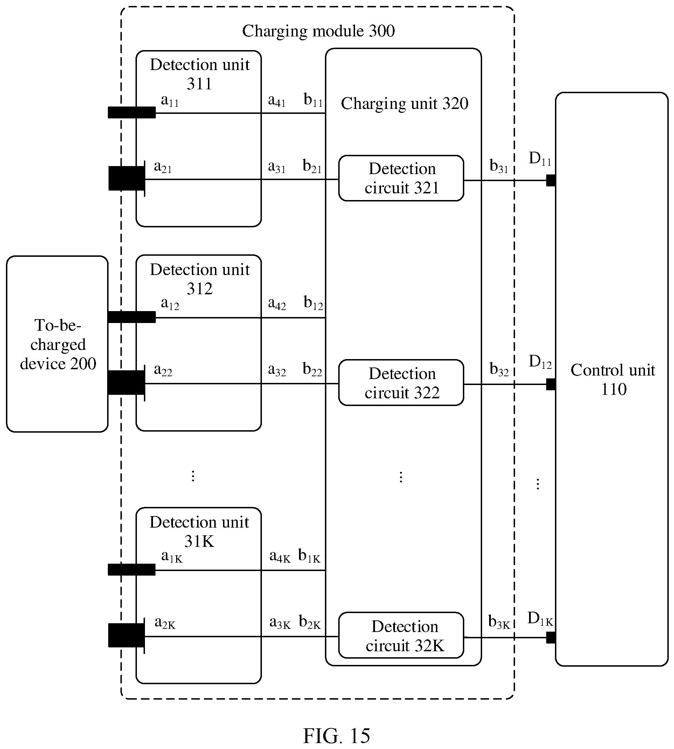

It should be noted that the foregoing merely describes several possible implementation solutions of the charging module 300 as an example. During implementation, the charging module may be further varied to obtain a new implementation solution. The following describes several possible variant solutions by using examples:
In a possible variation, FIG. 15 is a diagram of a structure of yet another charging module according to an embodiment of this application. As shown in FIG. 15, in the variation, to reduce a quantity of charging modules in a scenario with a plurality of charging requirements, K detection units 311 to 31K may alternatively be disposed in one charging module 310, K detection circuits 321 to 32K that are in a one-to-one correspondence with the K detection units 311 to 31K are disposed in a charging unit 320, and a connection between each detection unit and a corresponding detection circuit, and a connection between the detection circuit and a control unit 110 are implemented in the manner in the foregoing implementation solution 3, where K is an integer greater than or equal to 2. In this way, when a to-be-charged device 200 is connected to a detection unit in the charging module 300, a detection circuit corresponding to the detection unit detects connection location information, and may send the connection location information to the control unit 110. For ease of understanding, a possible scenario of the example is as follows: In field of internet of vehicles, an in-vehicle charger is disposed near a driver seat and a front passenger seat. A charging module in the in-vehicle charger includes one charging case and two detection units, and the charging case includes two detection circuits that are in a one-to-one correspondence with the two detection units. The two detection units respectively correspond to the driver seat and the front passenger seat. In this way, when a user sitting on the front passenger seat connects a to-be-charged device to the in-vehicle charger, the detection unit corresponding to the front passenger seat is turned on. After the detection circuit corresponding to the detection unit sends connection location information to the control unit, the control unit learns that the to-be-charged device of the user sitting on the front passenger seat is being charged, so that the control unit can provide a targeted service for the user sitting on the front passenger seat.

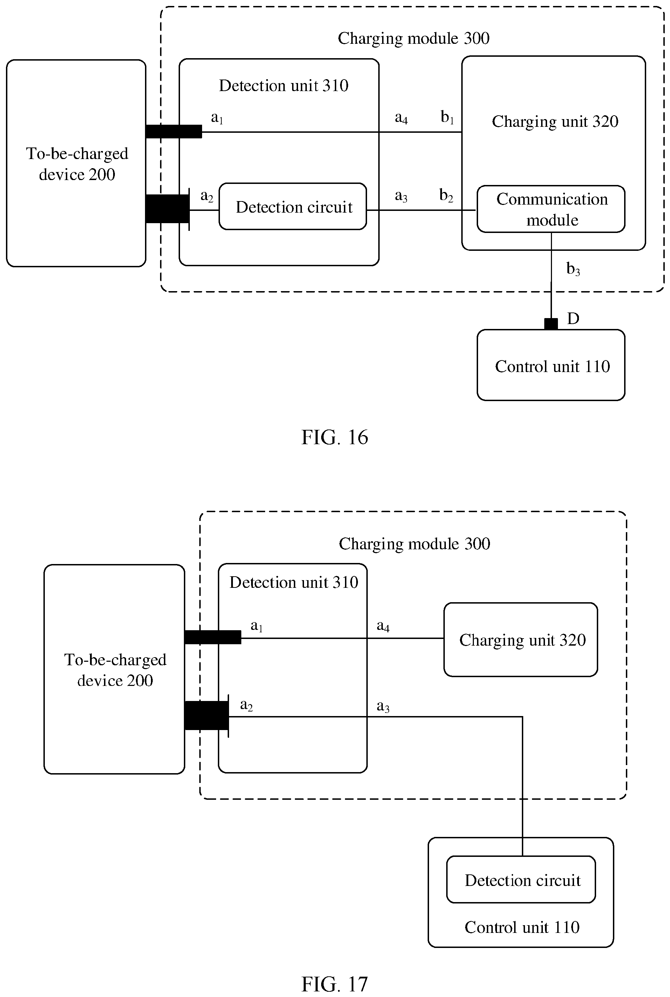

In another possible variation, FIG. 16 is a diagram of a structure of another charging module according to an embodiment of this application. As shown in FIG. 16, in the variation, a detection circuit is disposed in a detection unit 310, a communication module is disposed in a charging unit 320, and the detection circuit in the detection unit 310 has a detection function and a communication function. In this way, when a to-be-charged device 200 is connected to the detection unit 310, the detection circuit in the detection unit 310 detects connection location information and may send the connection location information to the charging unit 320, and the communication module in the charging unit 320 forwards the connection location information to a control unit 110.

In still another possible variation, FIG. 17 is a diagram of a structure of still another charging module according to an embodiment of this application. As shown in FIG. 17, in the variation, a detection circuit is disposed in a control unit 110, and the detection circuit is directly connected after a second interface a₂ and a third interface a₃ of a detection unit 310 are in communication with each other. In this way, when a to-be-charged device 200 is connected to the charging module 300, the detection unit 310 transmits information about a connected electrical signal to the detection circuit through the second interface a₂ and the third interface a₃. Therefore, the control unit monitors a change of the electrical signal at the third interface a₃ of the detection unit 310 by using the detection circuit disposed inside the control unit, so that the control unit can directly determine, without the detection unit 310 sending information to the control unit 110, that the to-be-charged device is connected to the charging module 300. In this way, a communication loss in a detection process can be reduced.

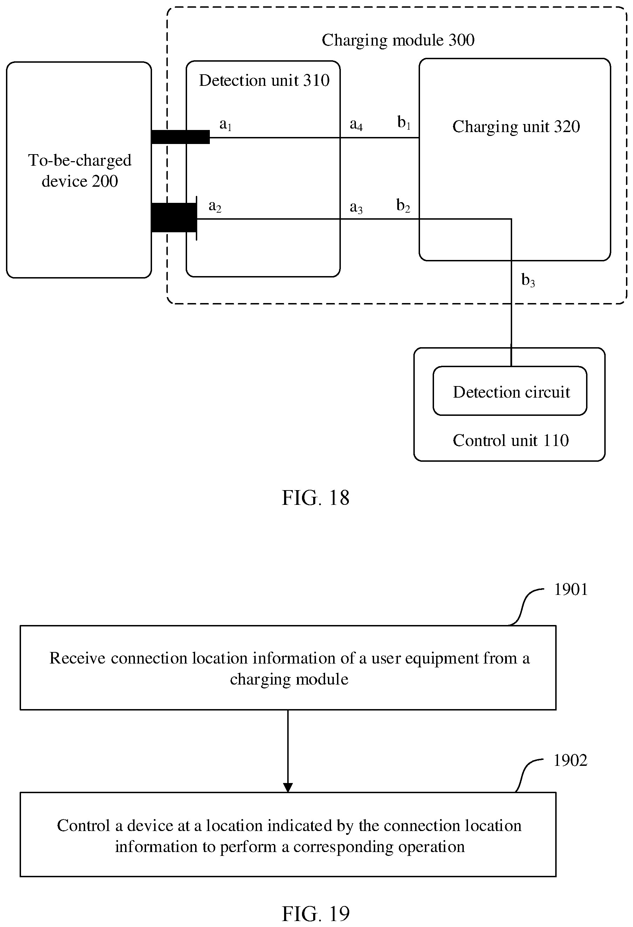

In yet another possible variation, FIG. 18 is a diagram of a structure of yet another charging module according to an embodiment of this application. As shown in FIG. 18, in the variation, a detection circuit is disposed in a control unit 110, and the detection circuit is connected after a second interface a₂ of a detection unit 310, a third interface a₃ of the detection unit 310, a second interface b₂ of a charging unit 320, and a third interface b₃ of the charging unit 320 are in communication with each other. In this case, when a to-be-charged device 200 is connected to the charging module 300, a connected status of an electrical signal is transmitted to the detection circuit through the second interface a₂ of the detection unit 310, the third interface a₃ of the detection unit 310, the second interface b₂ of the charging unit 320, and the third interface of the charging unit 320. Therefore, the control unit monitors a change of the electrical signal at the third interface b₃ of the charging unit 320 by using the detection circuit disposed inside the control unit, so that the control unit can directly determine, without the detection unit 310 sending information to the control unit 110, that the to-be-charged device is connected to the charging module 300. In this way, a communication loss in a detection process can also be reduced.

It should be understood that there are still many possible variations, which are not listed one by one in embodiments of this application.

In the foregoing charging module 300, the detection unit 310 is connected to the to-be-charged device 200 through an external interface. In other words, the foregoing charging module 300 is described in a wired charging manner. It should be understood that a solution in which a charging interface detection function is implemented in a wireless charging manner also falls within the protection scope of embodiments of this application. In addition, the charging module 300 includes both the detection unit 310 and the charging unit 320. That is, the charging module 300 has both a charging function and a detection function. However, in some implementations, the charging module 300 may alternatively include the detection unit 310 but not the charging unit 320. That is, the charging module 300 has a detection function but does not have a charging function. The charging module 300 is compatible with an existing charging device during use. In this way, a detection function is extended to an existing charging device that has only a charging function, to reduce impact on the existing charging device as much as possible.

In addition, in the foregoing implementations, a detection unit is separately disposed in the charging module to perform a connection location detection function. However, in another implementation, the detection unit may alternatively not be disposed, and the charging unit reports a connection location to the control unit in a protocol manner while charging. It should be understood that any solution that can implement both the charging function and the detection function falls within the protection scope of embodiments of this application. This is not specifically limited in embodiments of this application.

According to the charging module provided in the foregoing embodiments of this application, FIG. 19 is a schematic flowchart of an example of a control method according to an embodiment of this application. The control method is applicable to a control unit, for example, the foregoing control unit 110. As shown in FIG. 19, the control method includes the following steps.

Step 1901: The control unit receives connection location information of a user equipment from a charging module.

The connection location information may be from a detection unit in the charging module, for example, the detection unit 310 in the foregoing implementation 1 to implementation 3, or the first detection subunit 311 or the second detection subunit 312 in the foregoing implementation 4.

Step 1902: The control unit controls a device at a location indicated by the connection location information to perform a corresponding operation.

The following describes specific implementation of the foregoing control method by using an example in which the control method is applied to a vehicle. In the following example, it is assumed that the foregoing charging module is installed on the vehicle, the charging module is connected to an in-vehicle controller, and the in-vehicle controller is further connected to a cockpit domain controller. In addition, a user equipment below may be the to-be-charged device in the foregoing implementation 1 to implementation 3, or may be the holder in the foregoing implementation 4, or the holder and the to-be-charged device in the foregoing implementation 4. This is not specifically limited.

### Scenario 1: Safety belt reminder.

During implementation, that the control unit receives connection location information sent by a charging module means that a user equipment is connected to the charging module, and further means that a user sits on a seat corresponding to the charging module. Further, if it is determined that the vehicle is about to start driving or has started driving, and a safety belt of the seat corresponding to the charging module is in an unfastened state, prompt information "Fasten safety belt" may be sent to the user on the seat corresponding to the charging module. The prompt message may be notified to the user in a manner like voice broadcast, SMS message reminder, or display reminder. When a display is used for reminding, the display may be one or more of a primary display, a secondary display, a dashboard, or the like. This is not specifically limited.

For example, it is assumed that charging modules are installed at back positions of a driver seat and a front passenger seat of the vehicle. After a user sitting on a right rear-row seat connects an iPad to the charging module on the back of the front passenger seat, the charging module further sends, to the in-vehicle controller while charging the iPad, information that the iPad is connected to the charging module on the back of the front passenger seat. Then, if the in-vehicle controller receives a running start instruction sent by a user, the in-vehicle controller may first detect whether a safety belt corresponding to the right rear-row seat is in a fastened state. If the safety belt corresponding to the right rear-row seat is not in a fastened state, the in-vehicle controller may first remind, by using a display, the user sitting on the right rear-row seat to fasten the safety belt, and then send a motion control instruction to a power domain controller to control the vehicle to start running.

In addition, a status of the safety belt may be provided to the control unit by an insert buckle on a safety belt side. For example, when the safety belt is inserted into the buckle, the buckle may send, to the control unit, status prompt information indicating that the safety belt is inserted.

In the scenario 1, when detecting that a user equipment is connected to a position corresponding to a seat, the in-vehicle controller may first remind a user who is not fastened with a safety belt on the seat before starting the vehicle to run, to ensure that the vehicle starts running when the user sitting on the seat has fastened the safety belt, thereby ensuring driving safety of the user as much as possible.

### Scenario 2: Device removal reminder.

During implementation, that the control unit receives connection location information sent by a charging module means that a user equipment is connected to the charging module. Further, if it is determined that the user equipment is about to affect movement of a component inside the vehicle, prompt information "Remove the user equipment" may be sent to a user at a position corresponding to the charging module.

For example, it is assumed that charging modules are installed at back positions of a driver seat and a front passenger seat of the vehicle. After a user sitting on a left rear-row seat connects an iPad to the charging module on the back of the driver seat, the charging module further sends, to the in-vehicle controller while charging the iPad, information that the iPad is connected to the charging module on the back of the driver seat. Then, if the in-vehicle controller receives an instruction sent by a user for unfolding the driver seat, when it is determined that an unfolding angle of the driver seat affects the user equipment on the back of the driver seat (for example, the driver seat is a zero-power seat, and when the zero-power seat is unfolded, the user equipment may fall off due to a large tilt angle of the zero-power seat, and the user equipment may be damaged, or the user sitting on the left rear-row seat is hit), the in-vehicle controller may first remind, by using a display, the user sitting on the left rear-row seat to remove the user equipment, and then send, to the cockpit domain controller, the instruction for unfolding the driver seat.

In the scenario 2, when detecting that a user equipment is connected to a seat, the in-vehicle controller may first prompt the user to remove the user equipment connected to the seat before unfolding the seat, to protect safety of the user equipment and the user sitting on the rear-row seat.

### Scenario 3: Device blockage reminder.

During implementation, that the control unit receives connection location information sent by a charging module means that a user equipment is connected to the charging module. Further, if the control unit receives indication information sent by a user for starting laser projection, and determines that the currently connected user equipment affects an unfolding operation of a laser projection screen, a prompt message "Remove the user equipment" or "Unfolding the laser projection screen may affect use of the user equipment" may be sent to a user at a position corresponding to the charging module.

For example, it is assumed that charging modules are installed at back positions of a driver seat and a front passenger seat of the vehicle. After a user sitting on a right rear-row seat connects an iPad to the charging module on the back of the front passenger seat, the charging module further sends, to the in-vehicle controller while charging the iPad, information that the iPad is connected to the charging module on the back of the front passenger seat. Then, if the in-vehicle controller receives an instruction sent by a user for starting laser projection in front of the right rear-row seat, and when determining that the laser projection screen is blocked by the user equipment on the back of the front passenger seat during unfolding from a roof of the vehicle downward, the in-vehicle controller may first remind, by using a display, the user sitting on the right rear-row seat to remove the user equipment, and then send, to the cockpit domain controller, the instruction for starting laser projection in front of the right rear-row seat.

In the scenario 3, when detecting that a user equipment is connected to a seat, the in-vehicle controller may first prompt the user to remove the user equipment that blocks unfolding of the laser projection screen before unfolding the laser projection screen near the seat, to ensure that the laser projection screen can be smoothly unfolded.

### Scenario 4: Device control.

During implementation, that the control unit receives connection location information sent by a charging module means that a user equipment is connected to the charging module, and the control unit stores a mapping relationship between all currently connected user equipments and respective corresponding connection locations. Further, a projection app is further set on an in-vehicle display. After detecting that a user taps the projection app, the control unit displays, through the in-vehicle display, the mapping relationship between all currently connected user equipments and respective corresponding connection locations. After the user selects a target user equipment based on the connection location of each user equipment, the target user equipment is controlled to perform directional projection or implement another operation.

For example, it is assumed that charging modules are installed at back positions of a driver seat and a front passenger seat of the vehicle. After a user sitting on a right rear-row seat connects an iPad to the charging module on the back of the front passenger seat, the charging module further sends, to the in-vehicle controller while charging the iPad, information that the iPad is connected to the charging module on the back of the front passenger seat. Then, if the in-vehicle controller determines that a user sitting on the driver seat/front passenger seat taps the projection app on the in-vehicle display, the in-vehicle display displays existence of an iPad connected to the back position of the front passenger seat. In this case, the user may tap the iPad on the in-vehicle display, and put projection content on the iPad by using the in-vehicle controller, so that the user sitting on the right rear-row seat can watch the projection content. Specifically, the projection content may be an animation. A parent sitting on the driver seat/front passenger seat may play, by using the operation, the animation to the iPad connected to the back position of the driver seat/front passenger seat, so that a child sitting on the right rear-row seat watches the animation. This relieves discomfort of the child during the ride, and reduces a probability of crying. Alternatively, the projection content may be an office file. An employee sitting on the driver seat/front passenger seat may play, by using the operation, the office file to the iPad connected to the back position of the driver seat/front passenger seat, so that an employee sitting on the right rear-row seat can view the office file. This makes full use of travel time to improve work efficiency.

In the scenario 4, when detecting that a user equipment is connected to a seat, the in-vehicle controller may work with the in-vehicle display to put corresponding content on the connected user equipment based on a touch instruction of the user, thereby improving flexible control of a front-row user on a rear-row connected user equipment.

### Scenario 5: Device forgetting reminder.

During implementation, that the control unit receives connection location information sent by a charging module means that a user equipment is connected to the charging module, and further means that a user sits on a seat corresponding to the charging module. Further, if it is determined that a vehicle door near the seat is open, and the user equipment on the charging module corresponding to the seat is still in a connected state, a prompt message "Don't forget the user equipment" may be sent to the user on the seat corresponding to the charging module.

For example, it is assumed that charging modules are installed at back positions of a driver seat and a front passenger seat of the vehicle. After a user sitting on a right rear-row seat connects an iPad to the charging module on the back of the front passenger seat, the charging module further sends, to the in-vehicle controller while charging the iPad, information that the iPad is connected to the charging module on the back of the front passenger seat. Then, if the in-vehicle controller detects that a right rear door is open, and the iPad is still connected to the charging module on the back of the front passenger seat, the user sitting on the right rear-row seat may be reminded, by using a display, not to forget the iPad. If the user still does not take away the iPad within a set period of time after the reminding, the in-vehicle controller may further remind for a second time, and when a preset quantity of reminding times is reached, the in-vehicle controller may no longer remind.

In the scenario 5, when detecting that a user equipment is connected to a position corresponding to a seat, the in-vehicle controller may remind the user to carry the user equipment before determining that the user on the seat gets off the vehicle, to ensure that the user does not forget the user equipment, thereby improving user experience.

It should be noted that the foregoing scenario 1 to scenario 5 merely describe several possible applications of the foregoing control solution in a cockpit domain of the vehicle as an example, and there may be another application in an actual operation. For example, the foregoing control solution may be further applied to another aspect of the cockpit domain of the vehicle, or may be applied to another domain other than the cockpit domain of the vehicle in the field of internet of vehicles, or may be further applied to another field other than the field of internet of vehicles, for example, a smart home field or an industrial remote control field. This is not specifically limited.

The smart home field is used as an example. An association relationship between each household charging panel and each household appliance nearby is pre-deployed in a home local area network, and the foregoing charging module is disposed in the household charging panel. When a terminal device is connected to a household charging panel at a position, a charging module in the household charging panel sends connection location information to a home control hub. In this way, when a user sends a control instruction by using the terminal device, the home control hub may control a household appliance near the household charging panel to which the terminal device is connected, to provide a targeted service for the user.

For example, in a scenario, a user sits on a sofa in a living room to charge a mobile phone. If the user feels cold at this time, the user may send an instruction for increasing an air conditioner temperature to the home control hub by using the mobile phone. In this way, even if the user does not indicate which air conditioner needs to be adjusted, the home control hub can increase a temperature of an air conditioner placed in the living room based on a case in which a charger to which the mobile phone is connected is in the living room, to meet a requirement of the user sitting in the living room without affecting users at other locations in the home.

In addition, with evolution of a system architecture and emergence of a new scenario, the control solution provided in embodiments of this application is also applicable to a similar technical problem. This is not specifically limited in embodiments of this application.

According to the charging module provided in embodiments of this application, an embodiment of this application further provides a charging apparatus. The transmit module may include the charging module described in the foregoing content. For example, the charging apparatus may be presented as a charging base or a charging panel.

According to the charging module provided in embodiments of this application, an embodiment of this application further provides a control system. The control system includes the control unit and the charging apparatus that are described in the foregoing content. The charging apparatus is configured to send connection location information of a to-be-charged device to the control unit. The control unit is configured to: obtain a control instruction of the to-be-charged device, and control a device indicated by the connection location information to complete a control operation.

According to the charging module provided in embodiments of this application, an embodiment of this application further provides a terminal device. The terminal device includes the control system described in the foregoing content.

For example, examples of the terminal device include but are not limited to: a smart home device (for example, a television, a robotic vacuum cleaner, a smart desk lamp, an acoustic system, an intelligent lighting system, an electrical apparatus control system, home background music, a home theater system, an intercom system, or video surveillance), an intelligent transportation device (for example, a vehicle, a ship, an uncrewed aerial vehicle, a train, a lorry, or a truck), an intelligent manufacturing device (for example, a robot, an industrial device, intelligent logistics, or a smart factory), and an intelligent terminal (for example, a mobile phone, a computer, a tablet computer, a palmtop computer, a desktop computer, a headset, acoustic equipment, a wearable device, an in-vehicle device, a virtual reality device, or an augmented reality device).

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A charging module, comprising:
a charging unit and a detection unit, wherein
the charging unit is connected to a to-be-charged device, and is configured to supply power to the to-be-charged device; and
the detection unit is connected to a control unit, and is configured to send connection location information of the to-be-charged device to the control unit.

2. The charging module according to claim 1, wherein
the detection unit comprises a first interface, a second interface, a third interface, and a fourth interface;
the first interface communicates with the fourth interface, and the second interface communicates with the third interface; and
the first interface is configured to connect to the to-be-charged device, the second interface is configured to connect to the to-be-charged device and receive a reference electrical signal, the third interface is configured to connect to the control unit, and the fourth interface is configured to connect to the charging unit.

3. The charging module according to claim 2, wherein the reference signal is a ground signal; and
the second interface is grounded.

4. The charging module according to claim 2, wherein the reference signal is a ground signal;
the detection unit further comprises a fifth interface; and
the fifth interface is connected to a grounding component in the control unit after being in communication with the second interface.

5. The charging module according to any one of claims 2 to 4, wherein
the third interface of the detection unit is connected to a detection interface in the control unit through a hard wire, and the detection interface is configured to determine the connection location information of the to-be-charged device based on an electrical signal status at the third interface of the detection unit.

6. The charging module according to any one of claims 2 to 4, wherein
the first interface of the detection unit is connected to a first interface of the charging unit after being in communication with the fourth interface of the detection unit, the second interface of the detection unit is connected to a second interface of the charging unit after being in communication with the third interface of the detection unit, and a third interface of the charging unit is configured to connect to the control unit.

7. The charging module according to claim 5, wherein
a third interface of the charging unit is connected to the detection interface in the control unit through a hard wire, and the detection interface is configured to determine the connection location information of the to-be-charged device based on an electrical signal status at the third interface of the charging unit.

8. The charging module according to claim 1, wherein
the detection unit comprises a first interface, a second interface, a third interface, and a fourth interface;
the charging unit comprises a detection circuit, a first interface, a second interface, and a third interface;
the first interface of the detection unit is connected to the first interface of the charging unit after being in communication with the fourth interface of the detection unit, the second interface of the detection unit is connected to the second interface of the charging unit after being in communication with the third interface of the detection unit, the second interface of the charging unit is further connected to a first end of the detection circuit, and a second end of the detection circuit is connected to the third interface of the charging unit;
the first interface of the detection unit and the second interface of the detection unit are configured to connect to the to-be-charged device, and the third interface of the charging unit is configured to connect to the control unit; and
the detection circuit is configured to: determine the connection location information of the to-be-charged device based on an electrical signal status at the second interface of the charging unit, and send the connection location information to the control unit through the third interface of the charging unit.

9. The charging module according to any one of claims 1 to 8, wherein
the second interface of the detection unit is presented in a contact type, a button type, a magnetic attachment type, or a buckle type.

10. The charging module according to any one of claims 1 to 9, wherein
the first interface of the detection unit comprises a power interface and at least one type of charging protocol interface.

11. The charging module according to claim 1, further comprising a holder, wherein the charging unit is disposed on the holder;
the detection unit comprises a first detection subunit and a second detection subunit;
the first detection subunit is configured to connect the to-be-charged device to the holder, and is configured to send the connection location information of the to-be-charged device to the control unit; and
the second detection subunit is configured to connect the holder to the control unit, and is configured to send connection location information of the holder to the control unit.

12. The charging module according to claim 11, wherein
the first detection subunit comprises a first interface, a second interface, and a third interface;
the second detection subunit comprises a first interface, a second interface, and a third interface;
the first interface of the first detection subunit is configured to connect to a first end of the charging unit, a second end of the charging unit is configured to connect to the first interface of the second detection subunit, the second interface of the first detection subunit communicates with the second interface of the second detection subunit, and the third interface of the first detection subunit communicates with the third interface of the second detection subunit; and
the first interface of the first detection subunit is configured to connect to a first detection interface of the to-be-charged device, the second interface of the first detection subunit is configured to connect to a second detection interface of the to-be-charged device and receive a reference signal, the third interface of the first detection subunit is configured to connect to a charging interface of the to-be-charged device, the first interface of the second detection subunit is configured to connect to a charging interface of the control unit, the second interface of the second detection subunit is configured to connect to a first detection interface of the control unit, and the third interface of the second detection subunit is configured to connect to a second detection interface of the control unit.

13. The charging module according to claim 12, wherein the reference signal is a ground signal;
a third end of the charging unit is grounded; and
the second interface of the first detection subunit is connected to the third end of the charging unit.

14. The charging module according to any one of claims 11 to 13, wherein the charging module is disposed on a vehicle seat;
the charging module further comprises a contact plate; and
the contact plate is configured to connect the second detection subunit to one end of a seat connector, and the other end of the seat connector is connected to the control unit.

15. The charging module according to any one of claims 11 to 14, wherein the charging module meets at least one of the following conditions:
the first interface of the first detection subunit comprises a power interface and at least one type of charging protocol interface;
the first interface of the second detection subunit comprises a power interface; and
at least one of the second interface of the first detection subunit, the third interface of the first detection subunit, the second interface of the second detection subunit, or the third interface of the second detection subunit is presented in a contact type, a button type, a magnetic attachment type, or a buckle type.

16. A to-be-charged device, comprising:
a charging interface and a detection interface, wherein
the charging interface is connected to a charging unit of a charging module, and is configured to receive a power supply signal provided by the charging unit; and
the detection interface is connected to a detection unit of the charging module, and is configured to provide connection location information of the to-be-charged device.

17. The to-be-charged device according to claim 16, wherein
the detection interface is presented in a contact type, a button type, a magnetic attachment type, or a buckle type.

18. The to-be-charged device according to claim 16 or 17, wherein
the charging interface comprises a power interface and at least one type of charging protocol interface.

19. A charging detection system, comprising a charging module and a to-be-charged device, wherein
the charging module is configured to provide a power supply signal for the to-be-charged device;
the to-be-charged device is configured to: receive the power supply signal of the charging module, and provide connection location information for the charging module; and
the charging module is further configured to send the connection location information of the to-be-charged device to a control unit.

20. A control method, comprising:
receiving connection location information of a user equipment from a charging module; and
controlling a device at a location indicated by the connection location information to perform a corresponding operation.

21. The method according to claim 20, wherein the controlling a device at a location indicated by the connection location information to perform a corresponding operation comprises:
if it is determined that a vehicle is about to start driving or has started driving, and a safety belt of a seat indicated by the connection location information is in an unfastened state, sending first prompt information, wherein the first prompt information indicates a user on the seat indicated by the connection location information to fasten the safety belt.

22. The method according to claim 20 or 21, wherein the controlling a device at a location indicated by the connection location information to perform a corresponding operation comprises:
if it is determined that the user equipment affects unfolding of the seat, sending second prompt information, wherein the second prompt information indicates to remove the user equipment.

23. The method according to any one of claims 20 to 22, wherein the controlling a device at a location indicated by the connection location information to perform a corresponding operation comprises:
if it is determined that the user equipment affects an unfolding operation of a laser projection screen, sending third prompt information, wherein the third prompt information indicates to remove the user equipment, or is used to indicate that unfolding the laser projection screen affects use of the user equipment.

24. The method according to any one of claims 20 to 23, wherein the controlling a device at a location indicated by the connection location information to perform a corresponding operation comprises:
after detecting that a projection application on a head unit display is tapped, displaying all currently connected user equipments and respective corresponding connection locations through the in-vehicle display; and
after detecting that a user equipment at a target location on the head unit display is tapped, controlling the user equipment at the target location to perform directional projection.

25. The method according to any one of claims 20 to 24, wherein the controlling a device at a location indicated by the connection location information to perform a corresponding operation comprises:
if it is determined that a vehicle door indicated by the connection location information is open, sending fourth prompt information, wherein the fourth prompt information is used to prompt not to forget the user equipment.

26. A charging apparatus, comprising the charging module according to any one of claims 1 to 15.

27. The charging apparatus according to claim 26, wherein
the charging apparatus is presented as a charging base or a charging panel.

28. A control system, comprising a control unit and the charging apparatus according to claim 26 or 27, wherein
the charging apparatus is configured to send connection location information of a to-be-charged device to the control unit; and
the control unit is configured to control a device at a location indicated by the connection location information to complete a corresponding operation.

29. A terminal device, comprising the control system according to claim 28.
